# EUROPÄISCHE PATENTSCHRIFT

(11) **EP 2 457 777 B1**
(45) Veröffentlichungstag und Bekanntmachung des Hinweises auf die Patenterteilung: **11.12.2013**
(21) Anmeldenummer: 11009400.0
(22) Anmeldetag: 28.11.2011
(51) Int. Cl.: B60R 9/06, B60R 9/10

(54) **Lastenträger mit einem angetriebenen Lastentragteil**
Load holder with a powered load bearing section
Support de charges doté d'un élément de support de charges entraîné

(30) Priorität: 30.11.2010 DE 102010052773
(43) Veröffentlichungstag der Anmeldung: 30.05.2012
(60) Teilanmeldung: 13004329.2
(73) Patentinhaber: WESTFALIA - Automotive GmbH, 33378 Rheda-Wiedenbrück (DE)
(72) Erfinder: Hermbusch, Gerhard, 33449 Langenberg (DE); Wyrwich, Martin, 33378 Rheda-Wiedenbrück (DE)
(74) Vertreter: Bregenzer, Michael

(56) Entgegenhaltungen:
- EP-A1- 2 159 106
- EP-A2- 1 876 060
- DE-A1-102004 021 709
- DE-U1-202008 017 381
- US-A1- 2007 102 465

## Beschreibung

Die Erfindung betrifft einen Lastenträger für ein Fahrzeug, insbesondere einen Personenkraftwagen, gemäß dem Oberbegriff des Anspruchs 1.

Ein derartiger Lastenträger geht aus DE 20 2008 017 381 U1 hervor.

Bei dem Lastentragteil handelt es sich beispielsweise um eine Stütze, an der eine Last am Lastenträger befestigt werden kann, eine Trägerrinne, auf der ein Fahrrad abgestellt werden kann, einen Lastenaufsatz, der als Ganzes von der Tragbasis weggeschwenkt werden kann, z.B. um eine Heckklappe bei am Fahrzeug befindlichen Lastenträger öffnen zu können oder dergleichen. Derartige Lastentragteile müssen in ihrer jeweiligen Gebrauchsstellung beispielsweise durch eine Klemmfixierung, Verriegelung oder dergleichen, festgelegt werden. Will man den Lastenträger jedoch verstauen, beispielsweise zusammenfalten" , um ihn bei Nichtgebrauch platzsparend unterbringen zu können, werden die Lastentragteile in der Regel in Richtung der Tragbasis zurückverstellt, z.B. verschwenkt oder dergleichen, so dass der "gepackte" oder gefaltete Lastenträger wenig Platz beansprucht. All dies ist jedenfalls umständlich und erfordert eine Vielzahl von Maßnahmen, insbesondere Verriegelung, Verklemmung und dergleichen, der Lastentragteile.

Es ist daher die Aufgabe der vorliegenden Erfindung, einen bequem handhabbaren Lastenträger bereitzustellen.

Zur Lösung der Aufgabe ist ein Lastenträger gemäß der technischen Lehre des Anspruchs 1 vorgesehen.

Ein Grundgedanke der Erfindung ist es, dass ein Antrieb zum Verstellen des Lastentragteils vorhanden ist, z.B. ein Spindeltrieb, ein Zahngetriebe oder dergleichen. Dies kann beispielsweise manuell geschehen, so dass der Bediener beispielsweise das Lastentragteil zwischen einer ersten und einer zweiten Stellung durch eine Handkurbel verstellen kann, die z.B. auf eine Spindel wirkt oder dergleichen. Bevorzugt ist jedoch ein elektrisches oder fluidisches, also allgemeiner ein "motorisches" Antriebskonzept, d.h. dass der Bediener ohne Kraftaufwand, lediglich aufgrund eines beispielsweise elektrischen oder fluidischen Motors, z.B. eines Druckluftantriebs, den Lastenträger betätigt, d.h. das Lastentragteil beispielsweise zwischen einer Gebrauchsstellung und einer Nichtgebrauchsstellung verstellt. Selbstverständlich kann anhand der Erfindung auch eine Verstellung des Lastentragteils zwischen mehreren Gebrauchsstellungen erfolgen, so dass beispielsweise eine Anpassung an eine Fahrsituation, eine Verstellung in optimale geometrische Verhältnisse bezüglich der zu tragenden Last oder dergleichen möglich ist. So kann beispielsweise das Lastentragteil relativ zu einem weiteren Lastentragteil oder einem Anschlag verstellt werden, so dass die Last zwischen den beiden Komponenten geklemmt, jedenfalls zweckmäßigerweise spielfrei aufgenommen ist.

Zweckmäßigerweise ist vorgesehen, dass die Tragbasis in einer Gebrauchsstellung bei am Fahrzeug montiertem Lastenträger zum Tragen der Last vor ein Heck des Fahrzeugs ganz oder zumindest teilweise vorsteht. Die Tragbasis ist also bei Gebrauch hinter dem Heck des Kraftfahrzeuges und das Lastentragteil relativ zur Tragbasis erfindungsgemäß mit einem Antrieb verstellbar. Somit handelt es sich bei der Tragbasis also beispielsweise nicht um eine Führungsschienenanordnung, an der ein Schlitten aus dem Heck des Kraftfahrzeuges heraus oder in das Heck des Kraftfahrzeuges hinein, in der Art eines Schlittens, verstellbar ist sondern beispielsweise um ein Tragegestell, dass zwar an einem Schlitten angeordnet sein kann oder durch einen Schlitten gebildet ist, zu dem jedoch relativ das Lastentragteil verstellbar ist, erfindungsgemäß mit einem insbesondere elektromotorischen Lastentragteil-Antrieb.

Das erfindungsgemäße Lastentragteil kann, muss aber nicht durch einen Schlitten gebildet sein.

Es kann vorgesehen sein, dass das erfindungsgemäße Lastentragteil zwar an einem Schlitten angeordnet ist, der an Führungsschienen geführt und/oder aus einen Heck des Fahrzeugs ausfahrbar ist, aber nicht der Schlitten selbst ist. Mithin kann man also das Lastentragteil auch dadurch definieren, dass es keinen Schlitten bildet, der an Führungsschienen geführt und/oder aus einen Heck des Fahrzeugs ausfahrbar ist.

Das Lastentragteil, insbesondere in der Ausgestaltung als ein Schlitten, kann auch teleskopierbar sein.

Bevorzugt ist es, dass die Lageranordnung z.B. ein Schwenklager oder mehrere Schwenklager umfasst. Aber auch ein Schiebelager ist möglich. Selbstverständlich kann auch eine Kombination aus Schwenklager und Schiebelager bei der Lageranordnung vorhanden sein, so dass das Lastentragteil relativ zur Tragbasis schwenkverschieblich gelagert ist.

Der Lastentragteil-Antrieb kann beispielsweise einen elektrischen oder fluidischen Antrieb, insbesondere einen Direktantrieb, umfassen. Bevorzugt ist ein selbsthemmendes Getriebe. Wie gesagt, kann auch ein Handbetätigungselement, z.B. eine Kurbel, insbesondere eine bei Nichtgebrauch wegklappbare Kurbel oder eine steckbare Kurbel, vorgesehen sein.

Der Lastentragteil-Antrieb kann z.B. ein Drehantrieb oder ein Linearantrieb sein. Beispielsweise kann als Lastentragteil-Antrieb auch ein Elektro-Magnet dienen.

Weiterhin ist es vorteilhaft, wenn der Lastentragteil-Antrieb zum Antreiben von zwei oder mehr Lastentragteilen, insbesondere simultanen Antrieben, ausgestaltet ist. Dies kann beispielsweise über ein Getriebe, ein Kraftübertragungsglied, z.B. eine Stange oder dergleichen, geschehen.

Weiterhin kann vorteilhaft ein Getriebe vorgesehen sein, beispielsweise ein selbsthemmendes Getriebe. Dadurch ist es beispielsweise möglich, dass das mindestens eine Lastentragteil die durch den Lastentragteil-Antrieb angefahrene Position exakt einhält, wobei keine zusätzliche Halteeinrichtung erforderlich ist.

Es kann zweckmäßigerweise vorgesehen sein, dass sich das Lastentragteil in einer der Endstellungen, d.h. der Nichtgebrauchsstellung und/oder der Gebrauchsstellung, an einem Anschlag befindet bzw. durch den Lastentragteil-Antrieb an den Anschlag gefahren wird, so dass er dort ortsfest gehalten ist. Die Tragbasis hat z.B. mindestens einen Anschlag. Vorteilhaft ist der Gebrauchsstellung und der Nichtgebrauchsstellung mindestens ein Anschlag zugeordnet.

Es kann vorteilhaft im Bereich des Anschlages eine Keilflächenanordnung vorgesehen sein, d.h. dass beispielsweise das Lastentragteil auf eine Keilfläche aufläuft oder mit einer Keilfläche versehen ist, die auf eine entsprechende Gegenfläche oder Gegenkontur aufläuft, so dass sich das Lastentragteil sozusagen in der Endposition verkeilt. Dies ist insbesondere für einen spielfreien Fahrbetrieb des Fahrzeuges vorteilhaft.

Zum Antrieb des mindestens einen Lastentragteils eignen sich verschiedene Konzepte.

Eine Ausführungsform kann beispielsweise einen fluidtechnischen Antrieb, z.B. einen Pneumatikzylinder oder einen Druckzylinder umfassend, vorsehen. Der Zylinder beaufschlagt das Lastentragteil zumindest in einer Richtung, d.h. beispielsweise in die Gebrauchsstellung. In die umgekehrte Richtung kann ein manuelles Bedienkonzept notwendig sein, d.h. der Zylinder wird drucklos gehalten, wobei der Bediener das Lastentragteil mit manueller Kraft in Richtung das Lastentragteil-Führungsbasis bzw. in die Lastenträgeraufnahme des Fahrzeuges verschiebt. Selbstverständlich ist ein doppelt wirkendes Prinzip vorteilhaft, d.h. dass der fluidtechnische Antrieb das Lastentragteil sowohl in die Nichtgebrauchsstellung als auch in die Gebrauchsstellung verfahren kann.

Besonders bevorzugt ist ein elektromotorisches Antriebsprinzip. D.h. der Lastentragteil-Antrieb enthält einen oder mehrere Elektromotoren, wobei auch mindestens ein elektro-magnetischer Antrieb möglich ist.

Zwar wäre es prinzipiell auch möglich, dass das Lastentragteil mit einem Linearantrieb versehen ist. Bevorzugt ist jedoch ein Drehantrieb. Die Drehbewegung kann auch durch ein entsprechendes Übertragungsgetriebe in eine Linearbewegung des mindestens einen Lastentragteils übertragen werden.

Bevorzugt ist beispielsweise eine Zahnschienenanordnung. Man kann Zahnschienen beispielsweise an einem Profilteil oder einem sonstigen Ort des mindestens einen Lastentragteils anbringen, mit denen mindestens ein Ritzel des motorischen Lastentragteil-Antriebes kämmt.

Es versteht sich, dass auch ein Übersetzungsgetriebe, d.h. beispielsweise ein Zahngetriebe oder dergleichen mehr, bei dem Lastentragteil-Antrieb vorteilhaft ist. So ist es beispielsweise möglich, dass der Motor des Lastentragteil-Antriebs verhältnismäßig schnell dreht, das Lastentragteil aber langsam verfährt. Dies ist insbesondere im Sinne der Bediensicherheit. Weiterhin sind die Ströme, die der Motor dann verbraucht, verhältnismäßig gering, so dass das Bordnetz des Kraftfahrzeuges nicht über Gebühr beansprucht wird.

Es versteht sich, dass auch andere Getriebearten möglich sind: Beispielsweise könnte ein Seilzuggetriebe vorgesehen sein, um das Lastentragteil zwischen der Ruhe- und der Gebrauchsstellung zu verfahren. Weiterhin sind auch Kettengetriebe möglich.

Vorteilhaft ist bei dem Lastenträger ein Tragbasis-Antrieb zum Verstellen der Tragbasis zwischen einer ersten Stellung und einer zweiten Stellung vorhanden. Bei der ersten Stellung kann es sich z.B. um eine Gebrauchsstellung handeln, in der die Tragbasis, mithin also das Wesentliche des Lastenträgers, bei am Fahrzeug montierten Lastenträger zum Tragen einer Last vor ein Heck des Fahrzeugs vorsteht. Die zweite Stellung kann beispielsweise eine Nichtgebrauchsstellung sein, in der die Tragbasis zumindest teilweise in einer Lastenträger-Aufnahme des Fahrzeugs aufgenommen ist. Jedenfalls ist die Tragbasis an sich mittels des Tragbasis-Antriebs verstellbar, beispielsweise linear verstellbar, schwenkbar oder beides.

Eine bevorzugte Variante der Erfindung sieht vor, dass der Lastentragteil-Antrieb zumindest teilweise durch diesen Tragbasis-Antrieb gebildet ist. Der Lastentragteil-Antrieb umfasst zumindest ein Übertragungsgetriebe, z.B. ein Zahngetriebe, ein Keilgetriebe, ein Seilgetriebe oder eine Kombination dieser Getriebearten, zum Koppeln einer Bewegung des Lastentragteils mit einer Bewegung der Tragbasis. Bei einem Verstellen der Tragbasis wird also das mindestens eine Lastentragteil mitgenommen. Wenn also die Tragbasis in einer zweckmäßigen Ausgestaltung als ein Schlitten ausgestaltet ist, der beispielsweise in der Art einer Schublade in eine Aufnahme am Heck des Fahrzeuges einfahrbar ist, wird dabei das mindestens eine Lastentragteil, z.B. eine Stütze, ein U-Bügel, eine Trägerrinne zum Abstellen von Fahrrädern, eine Plattform oder dergleichen, mitgenommen. Fährt die Tragbasis in die Lastenträger-Aufnahme des Fahrzeugs ein, wird der Lastenträger sozusagen automatisch zusammengefaltet bzw. nimmt ein kompakteres Maß ein, so dass er in die Schubladenaufnahme bzw. die Lastenträger-Aufnahme passt, während er bei der umgekehrten Bewegung sich quasi entfaltet, d.h. eines oder mehrere Lastentragteile werden quasi automatisch ausgefaltet oder in ihre Nutzposition verstellt.

Bevorzugt greift der Lastentragteil-Antrieb zentral bzw. mittig am Lastentragteil an. Beispielsweise ist der Lastentragteil-Antrieb in einer Quermitte des mindestens einen Lastentragteils mit diesem verbunden.

Wenn das Lastentragteil Läuferschienen aufweist, die an der Tragbasis geführt sind, z.B. an Rollen oder Führungsschienen, greift der Lastentragteil-Antrieb zweckmäßigerweise an beiden der Läuferschienen an. Beispielsweise sind an beiden Läuferschienen Zahnungen vorhanden, mit denen jeweils Ritzel des Lastentragteil-Antriebs kämmen. Auch wenn das Lastentragteil mehrere Rollen oder Ritzel umfasst, ist es vorteilhaft mehrere Rollen oder Ritzel anzutreiben. Auf diesem Wege wird erreicht, dass sich das Lastentragteil beim Verfahren bezüglich der Lastentragteil-Führungsbasis nicht verkantet.

Die Tragbasis kann beispielsweise ein Basisgestell umfassen oder bilden. Auch bei dem Lastentragteil ist es vorteilhaft, wenn es eine Gestellbauweise aufweist, z.B. ein Tragegestell bildet oder umfasst.

Das Lastentragteil ist zweckmäßigerweise in einer zu einem Fahrbetrieb vorgesehenen Fahrstellung auf der Tragbasis an mindestens einer Stützstelle abgestützt, die einen Abstand zur Lageranordnung aufweist. Beispielsweise ist das vorher erwähnte Tragegestell, das relativ zur Tragbasis bzw. zum Basisgestell verschwenkbar und/oder verschieblich ist, in der Fahrstellung nicht nur an der Lageranordnung gestützt, sondern auch abseits davon.

Bei dem Lastentragteil sind mehrere Ausführungsformen bevorzugt, z.B. eine Ausgestaltung als Stützrinne zum Tragen eines Fahrrades, ein Haltebügel, z.B. ein U-förmiger Haltebügel zum Halten der Last, eine Stütze zum Stützen der Last oder dergleichen. Selbstverständlich kann das Lastentragteil auch eine Trägerplatte umfassen, insbesondere eine segmentierte oder mehrteilige Trägerplatte, wobei die Trägerplatte oder deren Segmente beispielsweise zwischen einer eine große Ausdehnung aufweisenden Gebrauchsstellung zum Abstellen oder Tragen der Last und einer relativ kompakten, z.B. zur Tragbasis hin verschwenkten oder verschobenen, Nichtgebrauchsstellung verstellbar ist.

Das Lastentragteil ist an einem weiteren Bauteil, z.B. an einem Tragegestell, beweglich gelagert, das seinerseits wiederum beweglich an der Tragbasis gelagert ist. Beispielsweise handelt es sich beim das Lastentragteil tragenden Bauteil seinerseits um eine Art Lastentragteil, das dem erfindungsgemäßen Konzept folgend ebenfalls motorisch oder manuell mittels eines manuellen Antriebs verstellbar sein kann.

Eine weitere Ausführungsform kann vorsehen, dass an dem Lastentragteil z.B. eine Stütze, insbesondere ein U-Bügel, zum Abstützen der Last beweglich gelagert ist.

Selbstverständlich kann das Lastentragteil selbst auch einen Schlitten bilden, der an der Tragbasis beweglich, z.B. linearbeweglich oder schwenkbeweglich oder beides, gelagert ist. Die Tragbasis bildet dann eine Schlitten-Führungsbasis. Das Lastentragteil bzw. der Schlitten ist in einer zu einem Fahrbetrieb vorgesehenen Fahrstellung näher bei der Tragbasis angeordnet, beispielsweise oberhalb der Tragbasis und auf dieser abgestützt, und in einer z.B. zum Be- und Entladen des Kraftfahrzeugs vorgesehen Ladestellung weiter von der Tragbasis entfernt, beispielsweise von dieser weg verschoben und/oder verschwenkt. Die Tragbasis hat dann beispielsweise Führungsschienen, Rollen oder dergleichen, an denen der Schlitten beweglich ist. Es versteht sich, dass auch mindestens eine gekrümmte Führungsbahn vorhanden sein kann, an der das Lastentragteil relativ zur Tragbasis, beispielsweise in der Art eines Schlittens, verfahrbar ist. Selbstverständlich kann auch das Lastentragteil selbst beispielsweise Rollen oder Gleiter enthalten, um relativ zur Tragbasis verstellt werden zu können.

Eine besonders bevorzugte Ausführungsform sieht vor, dass der Lastenträger vom Kraftfahrzeug lösbar ist. Er hat dann eine Befestigungseinrichtung zur lösbaren Befestigung an dem Kraftfahrzeug. Beispielsweise handelt es sich dabei um eine Befestigungseinrichtung zur Befestigung an einer Anhängekupplung des Kraftfahrzeuges. Es ist aber auch möglich, dass die Befestigungseinrichtung beispielsweise Steckvorsprünge und/oder Steckaufnahmen umfasst, mit denen der Lastenträger an Halterungen des Kraftfahrzeuges, beispielsweise Steckaufnahmen oder Steckvorsprüngen, befestigbar ist.

Weiterhin ist es zweckmäßig, wenn der Lastenträger einen lösbaren elektrischen Anschluss umfasst, z.B. einen Steckverbinder, der in eine Anhängersteckdose einsteckbar ist, so dass eine elektrische Verbindung zwischen dem Lastenträger und einem Bordnetz des Kraftfahrzeuges möglich ist. Selbstverständlich ist es auch denkbar, dass beispielsweise der Lastentragteil-Antrieb über einen ein Druckluft-Speicher und/oder einen elektrischen Speicher (Akku) oder einen sonstigen Stromspeicher, der am Lastenträger befestigt ist, mit Druckluft oder Strom versorgt wird, um das mindestens eine Lastentragteil zu verstellen.

Weiterhin ist es vorteilhaft, wenn der Lastenträger mindestens einen Empfänger für mindestens ein über das Bordnetz des Kraftfahrzeugs empfangenes elektrisches Signal aufweist, wobei der Lastentragteil-Antrieb in Abhängigkeit von dem mindestens einen elektrischen Signal schaltbar ist. Das elektrische Signal signalisiert beispielsweise "Motor-Aus", d.h. dass ein Antriebsmotor des Kraftfahrzeuges ausgeschaltet ist, so dass das mindestens eine Lastentragteil gefahrlos betätigbar ist.

Ein Lastentragteilantrieb-Schalter, der zweckmäßigerweise einen Bestandteil des Lastenträgers oder einer den Lastenträger umfassenden Lastenträgeranordnung bildet, ist verhältnismäßig frei positionierbar, z.B. im Innenraum des Kraftfahrzeuges. Es genügt eine fluidtechnische oder elektrische Leitung zum Lastentragteilantrieb-Schalter.

Vorzugsweise ist bei dem Lastenträger eine mindestens ein Halteglied aufweisende Halteeinrichtung, die in einer Haltestellung das Lastentragteil in mindestens einer Stellung bezüglich das Lastentragteil-Führungsbasis hält und in einer Freigabestellung das Lastentragteil zu einer Verstellung bezüglich das Lastentragteil-Führungsbasis freigibt, vorgesehen. Die Halteeinrichtung kann mechanisch bzw. manuell betätigbar sein oder auch einen mit einem Lastentragteilantrieb-Schalter und/oder dem Halteantrieb-Schalter schaltbaren elektrischen oder fluidischen Halteantrieb zum Verstellen des mindestens einen Halteglieds in die Haltestellung und/oder die Freigabestellung aufweisen.

Der Halteantrieb kann beispielsweise zum Verstellen des Halteglieds in die Haltestellung und/oder auch die Freigabestellung vorgesehen sein. So ist es beispielsweise möglich, dass das mindestens eine Halteglied durch eine Federanordnung in die Haltestellung federbelastet ist. In die Gegenrichtung, d.h. in die Freigabestellung, wirkt nunmehr der erfindungsgemäße Halteantrieb. Es ist auch möglich, dass das Halteglied durch eine Federanordnung in die Freigabestellung belastet ist und der Halteantrieb das Halteglied in die Haltestellung antreibt.

Der Lastentragteil-Antrieb oder der Halteantrieb können z.B. einen Elektromagneten, einen Elektromotor und/oder einen fluidtechnischen Motor, z.B. pneumatischen Motor umfassen.

Weiter können der Lastentragteil-Antrieb, wie erwähnt, über ein Getriebe auf das Lastentragteil oder der Halteantrieb über ein Getriebe auf das Halteglied wirken, das auch zweckmäßigerweise einen Bestandteil des Lastentragteil-Antriebs oder des Halteantriebs bilden kann. Das Getriebe umfasst z.B. ein Zahngetriebe, ein Keilgetriebe oder dergleichen. Das Getriebe ist zweckmäßigerweise selbsthemmend, z.B. aufgrund einer passenden Schrägneigung einer Keilschräge und/oder mittels eines selbsthemmenden Spindeltriebs oder dergleichen.

Das Halteglied kann in einer bevorzugten Ausführungsform einen Riegel umfassen. Die Halteeinrichtung könnte man dann auch als Verriegelungseinrichtung bezeichnen. Es versteht sich, dass auch mehrere Riegel vorgesehen sein können.

Eine weitere Variante sieht vor, dass das Halteglied ein Formschlussglied umfasst, das zu einem Formschluss mit einer Formschlussgegenkontur, beispielsweise am Lastentragteil, ausgestaltet ist. Wenn das Formschlussglied formschlüssig in die Formschlussgegenkontur eingreift bzw. mit dieser in formschlüssigem Eingriff ist, wird dadurch der Halt des mindestens einen Lastentragteils relativ zur Lastentragteil-Führungsbasis bewirkt.

Aber auch ein Verklemmen oder Verspannen des mindestens einen Lastentragteils durch die Halteeinrichtung ist möglich, so dass dieses bezüglich der Lastentragteil-Führungsbasis verspannt bzw. verklemmt ist. In diesem Fall umfasst das Halteglied beispielsweise ein Spannelement.

Die Lastentragteil-Führungsbasis umfasst zweckmäßigerweise Führungsschienen, an denen Läuferschienen des mindestens einen Lastentragteils geführt sind.

Das Halteglied, beispielsweise der Riegel oder das Formschlussglied, greift vorteilhaft in der Haltestellung in die Führungsschienen und/oder die Läuferschienen ein. Wenn sowohl die Führungs- als auch die Läuferschienen durchgriffen sind, wird dadurch ein besonders fester relativer Halt des mindestens einen Lastentragteils bezüglich das Lastentragteil-Führungsbasis erzielt. Es ist aber auch möglich, dass das Halteglied einen Längsanschlag für eine oder beide der Läuferschienen bildet.

Bevorzugt ist eine Steuerung für den Lastentragteil-Antrieb und/oder den Halteantrieb vorgesehen.

Die Steuerung kann beispielsweise so ausgestaltet sein, dass sie den Lastentragteil-Antrieb und/oder den Halteantrieb periodisch wiederholt mit Energie versorgt, beispielsweise bestromt oder fluidtechnisch ansteuert, wobei diese Energieversorgung von einer vorigen Betätigung durch den Lastentragteilantrieb-Schalter und/oder den Halteantrieb-Schalter abhängt.

Wenn also der Lastentragteil-Antrieb zunächst in seine Gebrauchsstellung betätigt worden ist, d.h. dass er das Lastentragteil beispielsweise von der Tragbasis wegverstellt, so dass das Lastentragteil eine Last tragen oder Stützen kann, steuert die Steuerung den Lastentragteil-Antrieb immer wieder in Richtung dieser Gebrauchsstellung an, so dass auch beim Fahrbetrieb kein Lösen bzw. ein Zurückverstellen beispielsweise in die Nichtgebrauchsstellung, zur Tragbasis hin, zu befürchten ist. Eine zusätzliche Verklemmung oder Verriegelung des Lastentragteils, beispielsweise durch die vorgenannte Halteeinrichtung, ist dann zwar zweckmäßig, jedoch nicht unbedingt notwendig.

Für den Lastentragteil-Antrieb und für den Halteantrieb können jeweils separate Schalter, d.h. ein Halteantrieb-Schalter und ein Lastentragteilantrieb-Schalter, vorhanden sein. Es ist aber auch möglich, dass ein und derselbe Antriebsschalter beide Antriebe, nämlich den Halteantrieb und den Lastentragteil-Antrieb schaltet. Bevorzugt ist dabei eine Schaltsequenz, d.h. dass zunächst der Halteantrieb betätigt wird, um das Lastentragteil zu entriegeln bzw. freizugeben, und anschließend der Lastentragteil-Antrieb, um das Lastentragteil bezüglich der Führungsbasis zu verfahren. Diese sequenzielle Schaltung kann beispielsweise durch einen entsprechend stufigen Antriebsschalter realisiert sein. Es ist aber auch eine Ablaufsteuerung möglich, die vorteilhaft in der nachfolgend noch näher beschriebenen Steuerung integriert sein kann. Es versteht sich, dass beim Verriegeln bzw. beim Erreichen der Endposition eine umgekehrte Betätigung zweckmäßig ist, d.h. dass zunächst der Lastentragteil-Antrieb abschaltet, bevor der Halteantrieb das Lastentragteil in der jeweiligen Längsposition festlegt.

An dieser Stelle sei bemerkt, dass das Lastentragteil selbstverständlich mehrere Gebrauchspositionen haben kann, bei denen er unterschiedlich weit vor das Heck des Fahrzeuges vorsteht. Wenn also nur eine verhältnismäßig kompakte Last aufgelegt werden soll, kann das Lastentragteil auch weniger weit vor das Heck des Fahrzeuges vorfahren.

Weiterhin sei festgehalten, dass die Halteeinrichtung zwar eine Option darstellt, jedoch nicht zwingend notwendig ist. Wie gesagt, kann bereits der Lastentragteil-Antrieb ein ortsfestes Halten des mindestens einen Lastentragteils an der jeweiligen Längsposition, beispielsweise der Gebrauchsstellung oder der Nichtgebrauchsstellung, gewährleisten, insbesondere dann, wenn das Lastentragteil auf einen Anschlag und/oder eine Keilfläche gefahren wird.

Wird also z.B. der Lastentragteil-Antrieb durch den Lastentragteilantrieb-Schalter in Richtung der Ruhe- oder der Gebrauchsstellung und/oder der Halteantrieb durch den Halteantrieb-Schalter in Richtung der Haltestellung betätigt, taktet die Steuerung sozusagen nach und beaufschlagt den Lastentragteil-Antrieb immer wieder in Richtung der Ruhe- oder der Gebrauchsstellung bzw. den Halteantrieb immer wieder in Richtung der Haltestellung. Dadurch wird einem unbeabsichtigten Lösen des Halteglieds vorgebeugt. Auch das umgekehrte ist möglich, dass nämlich die Steuerung den Halteantrieb in Richtung der Freigabestellung periodisch mit Energie versorgt, wenn zuvor von einem Bediener der Befehl zum Schalten in Richtung der Freigabestellung gegeben worden ist.

Der Lastentragteilantrieb-Schalter und/oder der Halteantrieb-Schalter kann beliebig positioniert werden, beispielsweise im Innenraum des Kraftfahrzeuges, insbesondere im Cockpit, in einem Gepäckabteil oder dergleichen. Bevorzugt ist die Anordnung des Lastentragteilantrieb-Schalters und/oder des Halteantrieb-Schalters in einem Außenbereich des Fahrzeugs. Dazu ist der Lastentragteilantrieb-Schalter und/oder der Halteantrieb-Schalter beispielsweise in einer passenden elektrischen Schutzart ausgestaltet, weist insbesondere einen Spritzwasserschutz auf, z.B. mit Schutzart IP 44.

Bei der Anordnung im Außenbereich ist es vorteilhaft, wenn der Lastentragteilantrieb-Schalter und/oder der Halteantrieb-Schalter am Lastentragteil, beispielsweise hinter oder an einem Kennzeichenträger des mindestens einen Lastentragteils, angeordnet ist. Weiterhin ist es möglich, dass der Lastentragteilantrieb-Schalter und/oder der Halteantrieb-Schalter eine Halterung zur Befestigung am Heck des Fahrzeugs aufweist oder zur Befestigung am Heck des Kraftfahrzeuges ausgestaltet ist. Diese Anordnung hat den großen Vorteil, dass der Bediener zugleich den Lastentragteilantrieb-Schalter und/oder den Halteantrieb-Schalter betätigen kann und das Lastentragteil in einem Greifbereich hat.

Die Halterung bildet beispielsweise einen Bestandteil eines Heckstoßfängers des Kraftfahrzeuges oder ist für die Anordnung am Heckstoßfänger ausgestaltet. Es versteht sich, dass die Halterung bzw. der Lastentragteilantrieb-Schalter und/oder der Halteantrieb-Schalter auch hinter einem Heckstoßfänger, d.h. beim normalen Gebrauch des Fahrzeuges unsichtbar und vor Verschmutzung geschützt, anordenbar sein kann.

In diesem Zusammenhang sei erwähnt, dass die Anordnung eines Betätigungselements - bei der Erfindung des Halteantrieb-Schalters - im Heckbereich nahe beim Lastentragteil auch bei einer mechanisch betätigbaren Halteeinrichtung eines Lastenträgers gemäß dem Oberbegriff des Anspruches 1 eine eigenständige Erfindung darstellt. Zwischen dem so angeordneten "mechanischen" Betätigungselement und der mechanisch betätigbaren Halteeinrichtung ist zweckmäßigerweise ein Übertragungsglied, z.B. ein Bowdenzug, angeordnet.

Bevorzugt ist es, wenn der Lastenträger einen Empfänger zur drahtlosen Ansteuerung des Lastentragteilantrieb-Schalters und/oder des Halteantrieb-Schalters aufweist. Somit kann also der Lastentragteilantrieb-Schalter und/oder der Halteantrieb-Schalter drahtlos angesteuert werden, z.B. mit einer Fernbedienung, die ansonsten zur Verriegelung oder zum Öffnen des Fahrzeuges (Zentralverriegelung) vorgesehen ist.

Bevorzugt hat der Empfänger einen sehr kurzen, begrenzten Empfangsbereich. Dieser kann beispielsweise nur 50 bis 200cm betragen. Bevorzugt ist der Empfänger zur Anordnung am Heck des Kraftfahrzeuges ausgestaltet bzw. vorgesehen. Der Empfänger kann auch unmittelbar am Lastentragteil angeordnet sein. Alle vorgenannten Maßnahmen haben den Vorteil, dass die Halteeinrichtung nur dann in die Freigabestellung verstellt werden kann, wenn sich ein Bediener in der Nähe des mindestens einen Lastentragteils befindet. Auch dies hat den Vorteil, dass das Lastentragteil nicht unkontrolliert aus der Lastenträgeraufnahme ausfahren kann, z.B. wenn das Fahrzeug hangabwärts steht. Das "Fernsteuerungsprinzip" bzw. elektrische oder fluidische Antriebsprinzip für den erfindungsgemäßen Lastentragteil-Antrieb und/oder die Halteeinrichtung ermöglicht auch eine optimale Einbindung in ein Sicherheits- und Überwachungskonzept eines jeweiligen Fahrzeuges. Auch dies ermöglicht es, dass der Lastenträger beispielsweise nicht während der Fahrt des Fahrzeuges betätigt werden kann. In der Praxis realisiert man dies bislang dadurch, dass ein Betätigungselement für eine mechanische Betätigung der Halteeinrichtung im Gepäckabteil des Kraftfahrzeuges angeordnet ist, das in der Regel beim Fahrbetrieb des Fahrzeuges nicht zugänglich ist.

Der erfindungsgemäße Lastentragteil-Antrieb oder Halteantrieb ermöglicht jedoch, dass auch an anderer Stelle, beispielsweise im Cockpit des Fahrzeuges, der Lastentragteilantrieb-Schalter und/oder der Halteantrieb-Schalter oder ein Betätigungselement desselben angeordnet sein kann, ohne dass die Gefahr einer Fehlbedienung besteht.

So hat der Lastenträger beispielsweise eine Steuerung zur Aktivschaltung und/oder Deaktivierung des Lastentragteil-Antriebs, des Halteantriebs oder auch des Lastentragteil- und/oder des Halteantrieb-Schalters anhand mindestens einer Aktivierungsbedingung, die man im Falle der Deaktivierung auch als Deaktivierungsbedingung bezeichnen kann.

Die Steuerung kann so ausgestaltet sein, dass sie den Lastentragteilantrieb-Schalter und/oder den Lastentragteil-Antrieb und/oder den Halteantrieb-Schalter oder den Halteantrieb anhand der mindestens einen Aktivierungsbedingung für ein Zeitintervall aktiv schaltet oder deaktiviert. Somit ist es beispielsweise nur während dieses aktiven Zeitintervalls möglich, dass ein Bediener den Lastentragteilantrieb-Schalter und/oder den Halteantrieb-Schalter betätigt, der beispielsweise im Heckbereich des Fahrzeuges angeordnet ist.

Vorzugsweise umfasst die Steuerung zur Betätigung des insbesondere elektrischen Lastentragteilantrieb-Schalters und/oder den Halteantrieb-Schalters ein Betätigungselement mit einem in einem Außenbereich des Fahrzeugs angeordneten Bedienbereich nahe bei dem Lastenträger. Somit ist das Betätigungselement nahe beim Lastenträger bedienbar, so dass der Bediener beispielsweise gleichzeitig den Lastenträger ergreifen und den Lastentragteilantrieb-Schalter und/oder den Halteantrieb-Schalter betätigen kann.

Die Steuerung umfasst weiterhin zweckmäßigerweise einen Sensoreingang und/oder einen Sensor und ist zur Auswertung eines Sensorsignals des Sensors als Aktivierungsbedingung ausgeschaltet.

Der Sensor kann beispielsweise ein Sensor einer Abstandskontrolleinrichtung (PDC / Park Distance Control) sein. Wenn also beispielsweise unmittelbar hinter dem Heck des Fahrzeuges eine Person oder ein sonstiges Hindernis steht, kann dies die Steuerung als Aktivierungsbedingung auswerten und beispielsweise ein Verstellen des Halteantriebs in Richtung der Freigabestellung oder des Lastentragteil-Antriebs, insbesondere in die Gebrauchsstellung, verhindern.

Eine weitere Aktivierungsbedingung, die die Steuerung zweckmäßigerweise auswertet, ist das Unterschreiten einer Grenzgeschwindigkeit des Fahrzeuges. Wenn dieses beispielsweise mit einer Grenzgeschwindigkeit von beispielsweise maximal 5 bis 10km/h, vorzugsweise 2 bis 5km/h, rollt, darf das Lastentragteil durch den Lastentragteil-Antrieb verfahren und/oder darf die Halteeinrichtung betätigt werden, d.h. der Halteantrieb kann z.B. das Halteglied in die Haltestellung oder die Freigabestellung verstellen. Wenn das Fahrzeug schneller fährt, ist dies nicht möglich. Es kann aber auch vorgesehen sein, dass das Fahrzeug vollständig still stehen muss, um den Lastentragteil-Antrieb und/oder den Halteantrieb betätigen zu können.

Eine weitere Aktivierungsbedingung kann auch der Stillstand eines Fahrzeug-Motors des Fahrzeugs sein, so dass beispielsweise bei laufendem Motor ein Betätigen des Lastentragteil-Antriebs und/oder des Halteantriebes nicht möglich ist.

Weitere Aktivierungsbedingungen können sein:
- Eine Zentralverriegelung des Kraftfahrzeuges signalisiert "Fahrzeugtüren entriegelt"
- Schlüssel ist aus dem Zündschloss des Kraftfahrzeuges entfernt
- Motor ist aus, beispielsweise Klemme 15 aus,
- Klemme 15 ein, Kraftfahrzeug ist betriebsbereit
- oder eine sonstige Stellung des Motorstartschalters.

Eine vorteilhafte Ausgestaltung der Erfindung sieht vor, dass die mindestens eine Aktivierungsbedingung ein von einem Freigabeschalter sendbares Freigabesignal ist oder umfasst. Der Freigabeschalter ist beispielsweise im Innenraum des Fahrzeugs, beispielsweise im Cockpit desselben, im Gepäckabteil, vorzugsweise geschützt durch einen Deckel, oder an anderer Stelle des Fahrzeuges angeordnet. Der Freigabeschalter kann aber auch einen an einem Fahrzeugschlüssel für das Fahrzeug oder an einem am Schlüsselanhängergehäuse angeordneten Sender umfassen und der Lastenträger einen zugeordneten Funkempfänger zum Empfang des Freigabesignals.

Somit kann beispielsweise durch Betätigung des Freigabeschalters im Schlüssel das Zeitintervall durch den Bediener des Fahrzeuges gegeben werden, worauf dann das Zeitintervall zur Betätigung des Lastentragteilantrieb-Schalters und/oder des Halteantrieb-Schalters beginnt. Der Sender ist beispielsweise in einem Fahrzeugschlüsselgehäuse, insbesondere dessen Griff, angeordnet.

Die mindestens eine Aktivierungsbedingung kann auch eine Funktionsstellung eines Motorschalters zum Starten eines Fahrzeug-Motors des Fahrzeugs umfassen. Die Funktionsstellung ist beispielsweise eine Betriebsbereitschaft des Fahrzeuges, zum Beispiel ein Signal "Klemme 15 ein". Das Signal kann beispielsweise das geschaltete Plus am Zündstartschalter sein ("Klemme 15") oder auch die sogenannte Zündschloss-Radiostellung ("Klemme 15r").

Es ist aber auch der gerade umgekehrte Fall möglich, dass nämlich die mindestens eine Aktivierungsbedingung eine Funktionsstellung "Motor aus", zum Beispiel "Klemme 15", des Motorstartschalters umfasst. Somit ist also eine der Aktivierungsbedingungen jedenfalls so getroffen, dass zu der Aktivierung des Lastentragteilantrieb-Schalters und/oder des Halteantrieb-Schalters und/oder zum Auslösen des Zeitintervalls der Motor ausgeschaltet wird oder ist. Die Aktivierungsbedingung kann beispielsweise auch ein Zustandswechsel "Motor ein - Motor aus" sein, so dass beispielsweise nach Abstellen des Fahrzeuges die Halteeinrichtung betätigbar ist, z.B. in die Freigabestellung verstellbar ist und/oder das Zeitintervall zum Betätigen Lösen der Halteeinrichtung oder zum Fahren des Lastentragteil-Antriebs beginnt und der Bediener das Lastentragteil des Lastenträgers beispielsweise nach Betätigen des Lastentragteilantrieb-Schalters und/oder des Halteantrieb-Schalters und Entriegeln der Halteeinrichtung verstellen kann. Ein Zeitintervall, innerhalb dessen der Lastentragteil-Antrieb und/oder die Halteeinrichtung betätigbar ist, ist in dieser Situation vorzugsweise so bemessen, dass der Bediener zwar bequem zum Heck des Fahrzeuges gehen und dort das mindestens eine Lastentragteil z.B. in die Nichtgebrauchsstellung oder die Gebrauchsstellung verstellen kann. Dann endet das Zeitintervall jedoch, so dass eine Fehlmanipulation des Lastentragteils verhindert wird.

Die mindestens eine Aktivierungsbedingung kann auch eine Bestromung einer Leuchte des Fahrzeugs, insbesondere einer am Heck des Fahrzeugs angeordneten Leuchte, und/oder eine am Lastenträger angeordnete Leuchte umfassen. Die Heckleuchte ist beispielsweise eine Nebelschlussleuchte, ein Rückfahrscheinwerfer, eine Blinkleuchte des Fahrzeugs oder des Lastenträgers oder dergleichen. Wenn die erfindungsgemäße Steuerung auf der Basis des Heckleuchtensignals arbeitet, sind nur kurze Kabelwege erforderlich, was z.B. kostengünstig ist.

Eine Variante der Erfindung kann vorsehen, dass die Leuchte eine Leuchte des Lastenträgers ist, deren Bestromung eine Aktivierungsbedingung für die erfindungsgemäße Steuerung bildet. So könnte die Steuerung beispielsweise mit einer Stromversorgungsleitung für mindestens eine dieser lastenträgerseitigen Leuchten verbunden sein, beispielsweise mit der zum Lastenträger führenden Versorgungsleitung. Diese Variante ist aufgrund einer kurzen Leitungsführung vorteilhaft.

Besonders bevorzugt ist jedoch, dass die Steuerung zur Ermittlung einer Bestromung der Leuchte mit einem Bordnetz des Fahrzeugs, zum Beispiel mit einer zur jeweiligen Leuchte führenden Stromversorgungsleitung, verbunden ist. Es ist aber auch möglich, dass die Steuerung mit einem Bus des Bordnetzes verbunden ist, über das die Leuchte aktiviert wird. Das Bordnetz des Fahrzeugs ist von außen nicht manipulierbar, was die Diebstahlsicherheit verbessert.

Die mindestens eine Aktivierungsbedingung bildet zweckmäßigerweise einen Bestandteil einer Aktivierungsbedingungsgruppe, die die Steuerung zur Aktivschaltung des Lastentragteilantrieb-Schalters und/oder des Halteantrieb-Schalters für das Zeitintervall prüft, wobei die Aktivierungsbedingungsgruppe mindestens zwei Aktivierungsbedingungen aufweist, welche die Steuerung für eine Aktivierung des Lastentragteilantrieb-Schalters und/oder des Halteantrieb-Schalters prüft. Somit ist eine Aktivierung des Lastentragteilantrieb-Schalters und/oder des Halteantrieb-Schalters bei einem Einfachfehler, beispielsweise einem Kurzschluss, einer Störung an einem Schalter, durch eine Manipulation von außen oder dergleichen, unproblematisch, weil mindestens eine zweite Aktivierungsbedingung hinzutreten muss, bevor die Steuerung den Lastentragteilantrieb-Schalter und/oder den Halteantrieb-Schalter aktiv schaltet beziehungsweise für ein Auslösen des Halteantriebs freigibt.

Die Aktivierungsbedingungsgruppe umfasst zweckmäßigerweise mindestens zwei der vorgenannten Aktivierungsbedingungen.

Besonders vorteilhafte Varianten von Aktivierungsbedingungsgruppen werden nachfolgend vorgestellt:

Eine besonders bevorzugte Aktivierungsbedingungsgruppe umfasst beispielsweise die beiden folgenden Aktivierungsbedingungen: Motorstartschalter zum Starten eines Fahrzeug-Motors des Fahrzeugs in Funktionsstellung "Motor aus" und/oder "Schlüssel aus einem Zündschloss des Fahrzeugs entfernt". An dieser Bedingung erkennt die Steuerung, dass das Fahrzeug außer Betrieb ist. Eine andere Bedingung wäre, dass der Motor des Fahrzeuges nicht läuft. Allerdings ist das Signal "Klemme 15" im Bereich des Fahrzeug-Hecks z.B. wegen einer Anhänger-Steckdose beziehungsweise einer Anhängekupplung häufig ohnehin vorhanden, so dass die Stellung des Motorstartschalters eine bevorzugte, einfach realisierbare Bedingung ist. Die weitere Bedingung der Aktivierungsbedingungsgruppe ist dann:
- mindestens eine, vorzugsweise mindestens zwei Blinkleuchten des Fahrzeugs eingeschaltet beziehungsweise mit wechselnder Bestromung.

Nach dem Abstellen des Fahrzeuges ist das Signal "Klemme 15" in der Regel "AUS" beziehungsweise wird der Zündschlüssel aus dem Zündschloss entfernt.

In einem nächsten Schritt wird das Fahrzeug verriegelt oder entriegelt, wobei bei aktuellen Fahrzeugen die Blinker des Fahrzeuges zumindest einmal aufleuchten. Die Bedienung erfolgt beispielsweise über die Funkfernbedienung, deren Sender zweckmäßigerweise in einem Gehäuse des Fahrzeugschlüssels angeordnet ist. Die Sicherheit bei diesem Konzept ist hoch, da zum einen die Startbedingung "Klemme 15 aus" und zum anderen mindestens ein Heckleuchtensignal, vorzugsweise zwei Heckleuchtensignale (der beiden heckseitigen Blinkleuchten), von der erfindungsgemäßen Steuerung ausgewertet werden. Die Signale der heckseitigen Blinkerleuchten sind im Heckbereich mit kurzen Leitungswegen für die erfindungsgemäße Steuerung verfügbar. Eine Auslösung während der Fahrt des Fahrzeuges ist nicht möglich. Eine Sabotage ist kaum möglich. Zudem sind die Kosten dieser Variante gering. Die Bedienung ist komfortabel.

Es versteht sich, dass das Sicherheitskonzept der Aktivierungsbedingungsgruppe auch mit anderen kombinierten Aktivierungsbedingungen realisierbar ist, beispielsweise:
- Nebenschlussleuchte und/oder Rückfahrscheinwerfer eingeschaltet und
- Motorschalter zum Starten eines Fahrzeug-Motors des Fahrzeugs in Betriebsbereitschaft, beispielsweise Signal "Klemme 15 ein", "Schlüssel ins Zündschloss gesteckt" oder dergleichen.

Es versteht sich, dass zu den beiden vorgenannten Aktivierungsbedingungsgruppen auch weitere Aktivierungsbedingungen hinzutreten können, was die Sicherheit des erfindungsgemäßen Konzeptes erhöht.

Nachfolgend werden weitere Aktivierungsbedingungen erörtert, die vorteilhaft sind.

Mindestens eine Aktivierungsbedingung kann beispielsweise auch umfassen, dass der Lastentragteilantrieb-Schalter und/oder der Halteantrieb-Schalter vor Beginn der Aktivierung unbetätigt ist. Wenn also ein Bediener beispielsweise den Lastentragteilantrieb-Schalter und/oder den Halteantrieb-Schalter bereits drückt, bevor das Zeitintervall an sich beginnen würde, aktiviert die Steuerung den Lastentragteilantrieb-Schalter und/oder den Halteantrieb-Schalter nicht. Bei gedrücktem Lastentragteil-antrieb-Schalter und/oder dem Halteantrieb-Schalter erfolgt also keine Aktivierung.

Eine weitere Sicherheitsmaßnahme ist es, wenn die Steuerung ein Starten des Lastentragteil-Antriebs oder des Halteantriebs nur dann zulässt, wenn der Lastentragteilantrieb-Schalter und/oder der Halteantrieb-Schalter nach Beginn des Zeitintervalls von einer unbetätigten Stellung in eine Betätigungsstellung betätigt wird. Die Steuerung prüft also eine Signalflanke "Aus-Ein".

Der Lastentragteil-Antrieb ist vorteilhaft nur während einer Betätigung des Lastentragteilantrieb-Schalters und/oder der Halteantrieb nur während einer Betätigung des Halteantrieb-Schalters in Betrieb. Wenn der Bediener den Lastentragteilantrieb-Schalter und/oder den Halteantrieb-Schalter loslässt, schaltet auch das Lastentragteil- bzw. Halteantrieb ab. Dadurch wird sichergestellt, dass der Lastentragteil-Antrieb oder der Halteantrieb nicht ohne Bedieneraufsicht läuft.

Es versteht sich, dass bei einer Ausgestaltung der Erfindung der Lastentragteilantrieb-Schalter und/oder der Halteantrieb-Schalter nur einen Startimpuls für den Lastentragteil-Antrieb oder den Halteantrieb gibt und dieser dann so lange läuft, bis die das Lastentragteil die Gebrauchsstellung oder die Nichtgebrauchsstellung oder die Halteeinrichtung die Freigabestellung oder die Haltestellung erreicht.

Ferner kann z.B. bei der Steuerung eine Begrenzungseinrichtung vorgesehen sein, die eine Aktivierung, z.B. Bestromung, des Halteantriebs zeitlich auf eine zum Erreichen der Haltestellung oder der Freigabestellung oder eine Aktivierung des Lastentragteil-Antriebs zum Erreichen der Ruhe- oder Gebrauchsstellung nötige Dauer begrenzt. Dadurch wird z.B. eine Überhitzung oder ein unnötiger Energieverbrauch vermieden.

Die Steuerung kann so ausgestaltet sein, dass sie das Zeitintervall während einer Bestromung des Lastentragteil-Antriebs oder des Halteantriebs und/oder während einer Betätigung des Lastentragteilantrieb-Schalters oder Halteantrieb-Schalters verlängert. Somit wird verhindert, dass der Lastentragteil-Antrieb oder Halteantrieb abschaltet, bevor die Ruhe- oder Gebrauchsstellung bzw. die Haltestellung oder die Freigabestellung erreicht ist. Andererseits braucht das Zeitintervall nicht unnötig lange zu sein, da lediglich der Start des Lastentragteil-Antriebs oder Halteantriebs innerhalb des Zeitintervalls erfolgen muss. Sinngemäß ist diese Verlängerung also auch beim Lastentragteil-Antrieb bzw. Lastentragteilantrieb-Schalter vorteilhaft, um sicher die Ruhe- oder Gebrauchsstellung zu erreichen.

Die Steuerung umfasst zweckmäßigerweise mindestens einen Signalausgang zur Ansteuerung einer optischen und/oder akustischen Funktionsanzeigeeinrichtung des Fahrzeugs oder des Lastenträgers. Die Funktionsanzeigeeinrichtung kann aber auch ein integraler Bestandteil der Steuerung sein, beispielsweise auf einer Steuerungsplatine oder im Gehäuse der Steuerung angeordnet sein. Die Funktionsanzeigeeinrichtung ist zweckmäßigerweise im Bereich des Lastenträgers angeordnet, das heißt im Bedienbereich zum Verstellen des mindestens einen Lastentragteils zwischen der Gebrauchsstellung und der Nichtgebrauchsstellung. Ferner kann die Funktionsanzeigeeinrichtung auch in einem Display des Fahrzeugs vorgesehen sein, beispielsweise im Cockpit desselben.

Die Steuerung signalisiert beispielsweise eine Aktivierung des Lastentragteilantrieb-Schalters und/oder des Halteantrieb-Schalters über die mindestens eine Funktionsanzeigeeinrichtung. Ferner kann die Steuerung beispielsweise auch eine Störung der Halteeinrichtung oder eine Fehlbedienung mittels der Funktionsanzeigeeinrichtung anzeigen, beispielsweise wenn der Lastentragteilantrieb-Schalter und/oder der Halteantrieb-Schalter bereits vor Beginn des Zeitintervalls gedrückt war.

Ein weiteres Sicherheitsmerkmal kann ein Doppel-Betätigungskonzept sein: Der Lastentragteilantrieb-Schalter und/oder der Halteantrieb-Schalter kann nur dann wirksam betätigt werden, wenn ein zusätzlicher Freigabeschalter oder Sicherheitsschalter gleichzeitig oder in kurzer Zeit vorher bedient worden ist. Nur wenn also beide Schalter (Lastentragteilantrieb-Schalter UND Sicherheitsschalter bzw. Halteantrieb-Schalter und Sicherheitsschalter) gleichzeitig oder fast gleichzeitig betätigt werden, ist ein Verfahren des Halteantriebs von der Halte- in die Freigabestellung oder umgekehrt möglich.

Nachfolgend werden Ausführungsbeispiele der Erfindung anhand der Zeichnung dargestellt. Es zeigen:
- Figur 1: einen Lastenträger, der an einer Anhängekupplung eines Kraftfahrzeugs befestigbar ist, in einer Perspektive schräg von hinten,
- Figur 2: den Lastenträger gemäß Figur 1, jedoch mit einem linear verstellten Lastenträgerteil,
- Figur 3: ein zweites Ausführungsbeispiel in Gestalt eines Lastenträgers, dessen Lastentragteil als ein Schwenk-Schiebeaufsatz ausgestaltet ist in einer ersten Stellung,
- Figur 4: den Lastenträger gemäß Figur 3 jedoch mit einer zweiten Schwenkposition sowie einem alternativen Antriebskonzept,
- Figur 5: einen weiteren Lastenträger von schräg hinten, bei dem Trägerrinnen zum Auflegen von Fahrrädern motorisch verstellbar sind,
- Figur 6: ein Lastenträger, der einen Drehantrieb zum Verstellen seines ein Lastentragteil bildenden Lastenaufsatzes aufweist,
- Figur 7: einen Lastenträger in Gestalt eines Schlittens, dessen Lastenaufsatz, der ein Lastentragteil bildet, mittels eines Linearantriebs oder eines Spindeltriebs verstellbar ist,
- Figur 8: eine alternative Ausführungsform des Lastenträgers gemäß Figur 7, wobei eine Schwenkbewegung des Las- tenträgeraufsatzes von einem Schlittenantrieb gebildet ist und,
- Figur 9: einen Lastenträger in Gestalt eines Schlittens (schematisch dargestellt), dessen Bügel-Stütze bei der Verstellung des Schlittens aufgerichtet oder in eine horizontale Position verschwenkt wird.

Bei den nachfolgend im Detail erläuterten Lastenträgern 10a-10h sind gleiche oder gleichartige Komponenten mit denselben Bezugszeichen versehen, wobei teilweise die Kleinbuchstaben a-h zur Unterscheidung der Ausführungsbeispiele bzw. Lastenträger 10a-10h hinzugefügt sind.

Die Lastenträger 10a-10e sind von einem Fahrzeug 80 lösbare Lastenträger, während die Lastenträger 10f, 10g und 10h dauerhaft am Fahrzeug 80 verbleiben, beispielsweise in der Art einer Schublade aus einem Heck 81 des Fahrzeuges 80, beispielsweise einem Personenkraftwagen, herausgezogen werden oder auch wieder in diesem verstaut.

Die Lastenträger 10a-10e haben jeweils eine Tragbasis 11, die als Tragegestell ausgestaltet ist. Die jeweilige Tragbasis 11 umfasst einen Grundschenkel 12, von dem Seitenschenkel 13 abstehen. Der Grundschenkel 12 und die Seitenschenkel 13 bilden eine U-förmige Konfiguration. Der Grundschenkel 12 und die Seitenschenkel 13 werden beispielsweise von Profilteilen 14 gebildet, mit z.B. rechtwinkeligem Querschnitt, wobei selbstverständlich auch andere Profilgeometrien ohne Weiteres möglich sind, z.B. U-förmige, T-förmige oder dergleichen. Jedenfalls sind die aus Metall- und/oder Kunststoff bestehenden Profilteile 14 innen hohl, was ihnen Steifigkeit verleiht, sie dennoch leicht macht. Zudem können die Innenräume 15 für die Unterbringung weiterer Komponenten genutzt werden, was später noch deutlich wird.

Die Tragbasis 11 ist sozusagen das Grundgestell bzw. der Grundträger des Lastenträgers 10a-10e.

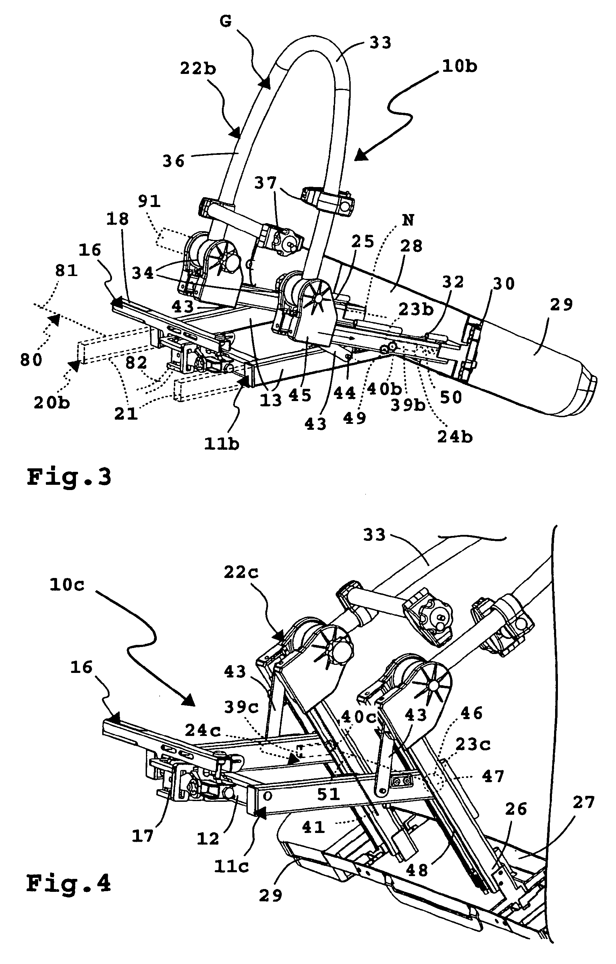

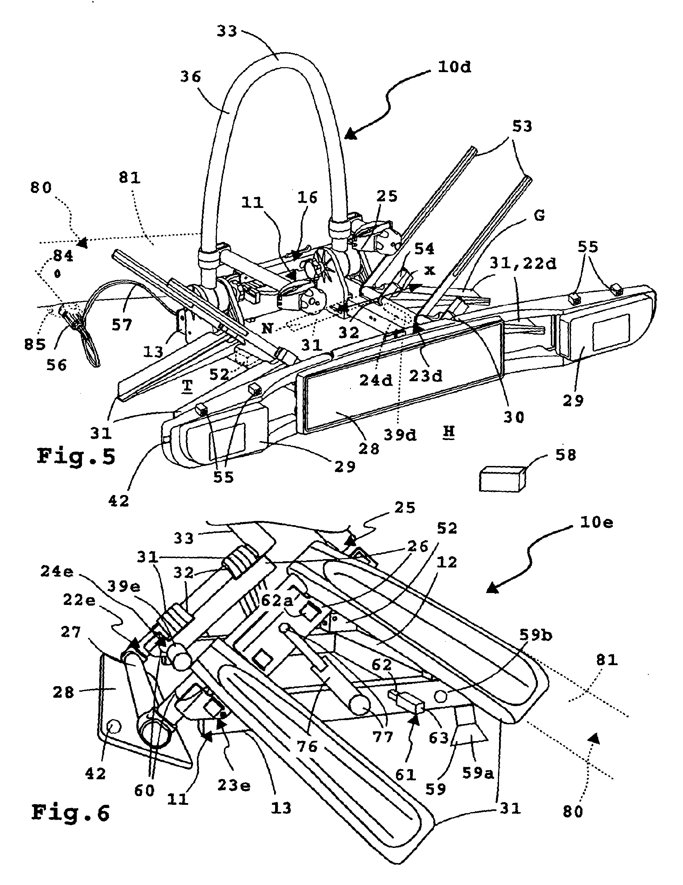

Die Tragbasis 11 ist zur lösbaren Befestigung am Fahrzeug 80 vorgesehen. Dazu ist eine Befestigungseinrichtung 16 vorhanden, mit der eine lösbare Verbindung zwischen dem Lastenträger 10a-10e und dem Fahrzeug 80 herstellbar ist. Die Befestigungseinrichtung 16 ist beispielsweise zur Befestigung an einer Anhängekupplung 82 (angedeutet in Figur 3) des Fahrzeugs 80 vorgesehen. Beispielsweise umfasst die Befestigungseinrichtung 16 eine Klemmkammer oder Klemmaufnahme 17, mit der die Befestigungseinrichtung 16 an einem Kugelkopf der Anhängekupplung 82 oder einem sonstigen Formstück derselben verklemmt werden kann. Die Klemmaufnahme 17 ist mittels eines Hebels 18 öffenbar und schließbar. Bei dem Lastenträger 10e (Figur 6) ist die Befestigungseinrichtung 16 verdeckt, d.h. nicht sichtbar, jedoch auch vorhanden.

Eine Tragbasis 11f, 11g und 11h der Lastenträger 10f, 10g und 10h ist als ein Schlitten 19f, 19g und 19h ausgestaltet, der an einer fahrzeugfesten Führungsbasis 20f, 20g und 20h verschieblich gelagert ist, vorliegend linear verschieblich, wobei selbstverständlich auch gekrümmte Schlitten-Führungsbahnen möglich sind, so dass der Schlitten beispielsweise nach hinten oben aus dem Heck 81 des Fahrzeugs 80 ausfahren kann bzw. nach vorn unten (in Fahrtrichtung gesehen) in Richtung in den Innenraum einer Lastenträgeraufnahme 83 des Fahrzeugs 80 hinein.

Beim Lastenträger 10b ist angedeutet, dass auch dieser an einer Führungsbasis geführt sein kann, die fahrzeugfest ist, z.B. einer Führungsbasis 20b (gestrichelte Linien), an der die in diesem Fall als Schlitten ausgestaltete Tragbasis 11 verschieblich gelagert sein kann, z.B. linear verschieblich.

Die Führungsbasis 20b sowie 20f, 20g und 20h hat jeweils Führungsschienen 21, an denen der Schlitten 19f, 19g, 19h geführt ist. Beispielsweise sind die Seitenschenkel 13 der Tragbasis 11f, 11g und 11h als Führungsprofile oder Schienen ausgestaltet, die an den Führungsschienen 21 verschieblich geführt sind. Beispielsweise können die Seitenschenkel 13 eine U-Form haben oder eine L-Form, so dass sie auf den Führungsschienen 21 aufliegen können. Selbstverständlich kommt es auf die konkrete Ausgestaltung der Führungsschienen 21 und der Seitenschenkel 13 hier nicht weiter an, d.h. eine verschiedenartige Ausgestaltung der Profile bzw. Schienengestalt ist ohne Weiteres möglich.

Jedenfalls ist bei allen Lastenträgern 10a-10h vorgesehen, dass sie beim Fahrbetrieb des Fahrzeugs 80, dann wenn sie benötigt werden und eine Last auf sie aufgelegt werden soll, eine Gebrauchsstellung einnehmen und dabei vor das Heck 81 des Fahrzeugs 80 vorstehen. Das Antriebskonzept gemäß der Erfindung könnte aber im Prinzip auch bei Dachträgern verwendet werden, bei an einer Heckklappe eines Fahrzeugs befestigbaren Trägern, oder dergleichen, was nachfolgend noch deutlich wird.

Weiterhin können teilweise nur bei den Lastenträgern 10a-10e dargestellte Komponenten selbstverständlich auch bei den Lastenträgern 10f-10h vorhanden sein. Des Weiteren ist die konkrete Ausgestaltung insoweit beispielsweise verstellbare Trägerrinnen zum Aufstellen von Fahrrädern gezeigt sind, nur beispielhaft zu verstehen. Selbstverständlich können die Lastenträger 10a-10h auch zum Tragen von beispielsweise Transportboxen, Transportplattformen, auch zusammenfaltbaren Transportboxen oder dergleichen, vorgesehen sein. Das komfortable Bedienkonzept ist in allen Fällen gewährleistet:

Die Lastenträger 10a-10h haben nämlich jeweils mindestens ein relativ zu ihrer Tragbasis 11, 11f-11h bewegliches Lastentragteil 22a-22h, das mittels einer Lageranordnung 23a-23h beweglich bezüglich der Tragbasis 11, 11f-11h gelagert ist.

Die Lastentragteile 22a-22h können bequem gehandhabt werden, da sie nämlich einem innovativen Konzept folgend jeweils mittels eines Lastentragteil-Antriebs 24a-24h antreibbar sind.

Bei den Lastentragteilen 22a-22c sowie 22e-22g handelt es sich jeweils um Lastenaufsätze oder Tragegestelle 25, die insgesamt zum Tragen einer Last vorgesehen sind. Die Tragegestelle 25 können beispielsweise dazu genutzt werden, Fahrräder auf ihnen abzustellen. Die Tragegestelle 25 können jeweils als Ganzes mittels des Lastentragteil-Antriebs 24a-24h verstellt werden, vorzugsweise zwischen einer Gebrauchsstellung G, in der sie für einen Gebrauch des jeweiligen Lastenträgers zur Verfügung stehen, d.h. zum Auflegen einer Last bzw. zu einem Fahrbetrieb, und einer nachfolgend vereinfacht als Nichtgebrauchsstellung N bezeichneten Stellung, die beispielsweise zum Verstauen des Lastenträgers 10a-10h gedacht ist, aber auch eine Ladestellung sein kann, die das Lastentragteil 22a-22h einnimmt, z.B. um die Zugänglichkeit zu dem Heck 81 des Fahrzeugs 80 zu verbessern oder ein leichteres Beladen des Lastentragteils 22a-22h ermöglicht. In dieser Ladestellung kann beispielsweise eine Heckklappe des Fahrzeugs 80 besser geöffnet werden oder ist ein Gepäckabteil besser zugänglich.

Die Tragegestelle 25 umfassen jeweils Tragschenkel 26, die über einen Verbindungsschenkel 27 miteinander verbunden sind. Der Verbindungsschenkel 27 ist beispielsweise als ein Kennzeichenträger ausgestaltet oder hält einen Kennzeichenträger 28. Der Verbindungsschenkel 27 und die Tragschenkel 26 bilden eine U-förmige Anordnung. Beim Fahrbetrieb des Fahrzeugs 80 stützen die Grundschenkel 12 der Tragbasis 11 die Tragschenkel 26 ab. Der Verbindungsschenkel 27 und der Grundschenkel 12 liegen einander gegenüber. Selbstverständlich können auch andere Gestellbauweisen gewählt sein. Weiterhin ist es denkbar, dass beispielsweise anstatt eines Tragegestells 25 eine Tragplattform, mithin also eine plattenartige Anordnung, vorgesehen ist.

Am Kennzeichenträger 28 können beispielsweise Leuchten 29 angeordnet sein. Die Leuchten 29 sind mittels Schwenklagern 30 schwenkbeweglich am Verbindungsschenkel 27 gelagert, so dass sie zwischen der in der Zeichnung dargestellten Fahrposition, bei der sie im Wesentlichen mit dem Kennzeichenträger 28 fluchten oder parallel dazu sind, und einer Nichtgebrauchsposition verstellbar, so dass sie nahe bei den Tragschenkeln 26 angeordnet sind. Mithin sind also die Leuchten 29 am Tragegestell 25 angeordnet und nicht an der Tragbasis 11, wobei dies selbstverständlich denkbar ist.

Das Tragegestell 25 lagert schwenkbar und/oder linear und/oder gekrümmt verschieblich Stützrinnen 31, die zum Abstellen von beispielsweise Fahrrädern oder anderen Zweirädern gedacht sind. Die Stützrinnen 31 sind mittels Schwenklagern 32 schwenkbar an den Tragschenkeln 26 gelagert, so dass sie zwischen der in der Zeichnung dargestellten Gebrauchsposition und einer in einen Innenraum zwischen den Tageschenkeln 26 vorgesehenen Nichtgebrauchsstellung oder Staustellung, verstellbar sind.

Auch eine Stütze 33 zum Abstützen der nicht dargestellten Last, kann zu den Verbindungsschenkeln 27 hin und von diesen weg in eine im Wesentlichen aufrechte Position oder winkelige Position gestellt werden, in der ein Lastenträger an ihnen befestigbar ist. Hierzu sind Schwenklager 34 vorgesehen. Mittels einer Klemmschraube 35 kann ein jeweiliges Schwenklager 34 fixiert werden, so dass die jeweilige Position der Stütze 33 fixiert ist.

Die Stütze 33 ist beispielsweise in der Gestalt eines U-Bügels oder eines V-Bügels ausgestaltet, d.h. sie bildet einen Haltebügel 36. An dem Haltebügel 36 sind beispielsweise Haltearme 37 zum Halten und Stützen der Last vorhanden. Die Haltearme 37 haben beispielsweise Klemmen, mit denen ein Rahmen eines Fahrrades geklemmt werden kann.

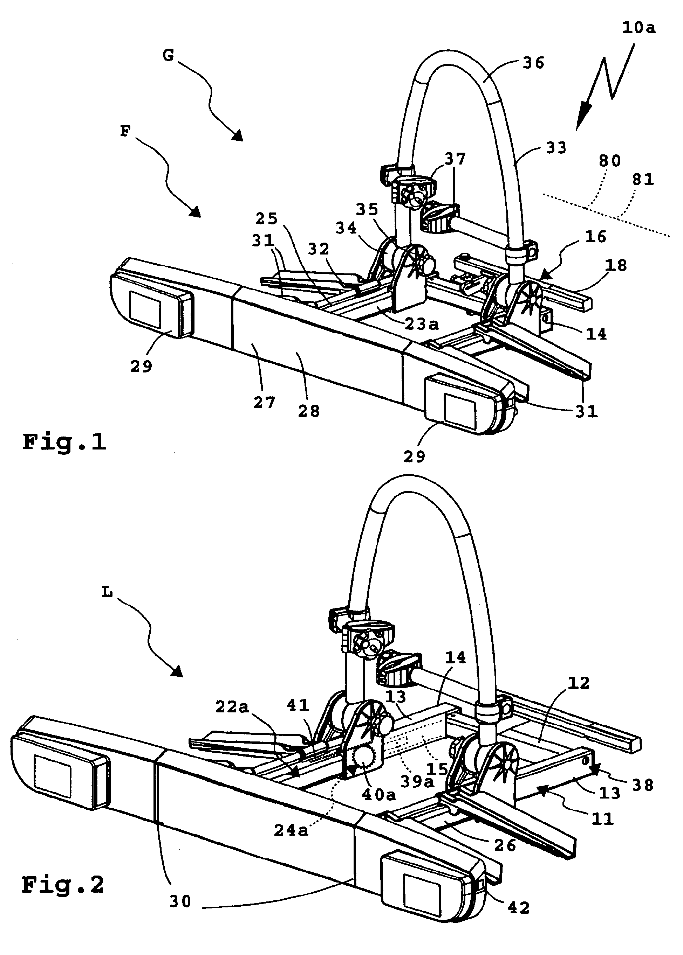

Die Tragbasis 11 des Lastenträgers 10a bildet eine Schlitten-Führungsbasis 38, an der das Lastentragteil 22a in der Art eines Schlittens verschieblich geführt ist. Beispielsweise bilden die Seitenschenkel 13 Führungsschienen, an denen die Tragschenkel 26 in der Art von Laufschienen schiebebeweglich gelagert sind. Nun wäre es denkbar, dass der Bediener durch manuelle Betätigung eine Verstellung bewirkt, so dass der Schlitten bzw. das Lastentragteil 22a zwischen der in Figur 1 dargestellten Fahrstellung und einer in Figur 2 dargestellten Ladestellung L, die zum Be- und Entladen des Fahrzeuges 80 komfortabel ist, verstellbar ist. In der Ladestellung L ist nämlich ein größerer Abstand zwischen dem Lastentragteil 22a, d.h. beispielsweise dem Haltebügel 36, und dem Heck 81 vorhanden, so dass dieses bequemer zugänglich ist. Vorliegend ist jedoch ein motorisches Konzept gewählt:

Der Lastentragteil-Antrieb 24a umfasst einen Motor 39a, der beispielsweise an der Tragbasis 11 befestigt ist. Z.B. befindet sich der Motor 39a im Innenraum 15 des Seitenschenkels 13. Der Motor 39a ist mit einem Antriebs-Ritzel 40a versehen, um das Lastentragteil 22a anzutreiben. Das Ritzel 40a kämmt beispielsweise mit einer Zahnschiene 41 am Lastentragteil 22a. Beispielsweise ist die Zahnschiene 41 an der dem Seitenschenkel 13 zugewandten Innenseite des Tragschenkels 26 angeordnet, derart, dass sie mit dem Ritzel 40a kämmen kann. Wenn also der Motor 39a läuft, bewegt er die Zahnschiene 41 linear hin und her, so dass dadurch auch der Schlitten bzw. das Lastentragteil 22a linear zwischen der Fahrstellung F und der Ladestellung L verfahrbar ist. An dieser Stelle sei bemerkt, dass selbstverständlich auch eine gekrümmte Verschiebebahn möglich ist, beispielsweise wenn die "Führungsschienen", nämlich die Seitenschenkel 13, einen gekrümmten Verlauf haben oder eine gekrümmte Führungsbahn aufweisen.

Alternativ könnte auch ein Seilzugantrieb vorgesehen sein, bei dem z.B. der Motor 39a einen Seilzug antreibt, der an der Tragbasis 11 angeordnet ist. Der Seilzug läuft beispielsweise über Umlenkelemente, z.B. Umlenkrollen, an den Längsendbereichen eines Seitenschenkels 13 um. An einem Trum des Seilzugs ist z.B. das Lastentragteil 22a, vorliegend also das Tragegestell 25 festgelegt und wird somit vom Seilzug mitgenommen. Beispielsweise kann an einem Profilteil, z.B. an der Oberseite des Seitenschenkels 13, ein Schlitz vorgesehen sein, durch den ein Mitnehmer vom vorzugsweise im Innern des Profilteils 14 angeordneten Seilzug zur Mitnahme des Lastentragteils 22a nach außen vorzustehen. Mithin ist es also ein erfindungsgemäßer Gedanke, einen Seilzug im Innern eines Profilteils anzuordnen.

Unmittelbar am Lastenträger 10a ist ein Lastentragteilantrieb-Schalter 42 angeschaltet. Der Schalter 42 befindet sich beispielsweise an einer der Leuchten 29, d.h. an einem weit hinteren, vom Heck 81 entfernten Bereich des Lastenträgers 10a. Solange ein Bediener auf den Schalter 42 drückt, fährt der Schlitten bzw. das Lastentragteil 22a. Wenn der Schalter 42 losgelassen wird, bleibt der Schlitten stehen, was der Gefahr von Verletzungen entgegenwirkt. Somit ist also quasi einen "Totmannschaltung" vorhanden.

Es versteht sich, dass der Schalter 42 auch einen vollständigen Verstellhub bewirken kann, d.h. dass der Schlitten beispielsweise bei einer jeweiligen Betätigung des Schalters 42 vollständig in die Fahrstellung F oder in die Ladestellung L fährt.

Es versteht sich, dass für jede Verfahrrichtung ein separater Schalter vorgesehen sein kann.

Eine Tastbetätigung kann so ausgestaltet sein, dass der Schlitten jeweils eine Bewegungsumkehr durchläuft, wenn der Schalter 42 betätigt wird.

Bei den Lastenträgern 10b, 10c ist der jeweilige Lastenaufsatz bzw. das Tragegestell 25 schwenkbar und zudem auch verschieblich bezüglich der Tragbasis 11 gelagert. Lageranordnungen 23b, 23c sind Mehrgelenkanordnungen und insoweit gleichartig aufgebaut, dass sie nachfolgend gemeinsam beschrieben werden können. Die Lageranordnungen 23b, 23c umfassen jeweils einen Lenkhebel 43, der mittels Schwenklagern 44, 45 am Seitenschenkel 13 und am Tragschenkel 26 schwenkbar gelagert ist. Der Lenkhebel 43 lenkt bzw. steuert eine Schwenk-Schiebebewegung des Tragegestells 25 bezüglich der Tragbasis 11b, 11c, die über ein Schwenkschiebelager 46 stattfindet. Das Schwenkschiebelager 46 umfasst beispielsweise eine Rolle oder einen Gleiter 47 an den vorderen, freien Enden der armartig abstehenden Seitenschenkeln 13. Die Tragschenkel 26 des Tragegestells 25 weisen einen Schlitz 48 auf, in die diese freien Enden und somit auch die Rolle bzw. der Gleiter 47 eingreifen kann. Somit rollt oder gleitet also das Profil des Verbindungsschenkels 27, mithin also der Verbindungsschenkel 27 als Ganzes, über die Rolle oder den Gleiter 47 und macht dabei nicht nur eine Schwenkbewegung durch, bei der das Tragegestell 25 nach hinten unten vom Heck 81 wegschwenkt, sondern auch eine Schiebebewegung nach hinten unten, so dass der Verbindungsschenkel 27 in einer in Figur 4 vollständig erreichten, in Figur 3 noch nicht ganz erreichten Ladestellung L näher beim Untergrund ist. Dadurch ist der Platzbedarf des Tragegestells 25 relativ klein. Nachzutragen wäre noch, dass an den Tragschenkeln 26 selbstverständlich in nicht dargestellter Weise Stützrinnen 31 schwenkbar gelagert sein können. Es ist beispielhaft ein Schwenklager 32 dargestellt.

Bei den Lastenträgern 10b, 10c sind unterschiedliche Antriebskonzepte realisiert:

Der Lastentragteil-Antrieb 24b ist am Tragegestell 25 angeordnet. Er enthält einen Motor 39b, beispielsweise einen Elektromotor, der ein Ritzel 40b antreibt oder aufweist. Das Ritzel 40b kann beispielsweise mit einem Zahnrad 49 kämmen, das drehfest an der Tragbasis 11b angeordnet ist. Der Motor 39b kann beispielsweise linear verschieblich entlang der Längserstreckungsrichtung der Tragschenkel 26 an denselben gelagert sein. Eine Feder 50 stellt sicher, dass das Ritzel 40b in Formschlusskontakt mit dem Zahnrad 39 bleibt.

Ein Motor 39c des Lastentragteil-Antriebs 24c ist an der Tragbasis 11 angeordnet. Beispielsweise befindet sich der Motor 39c im Innenraum eines Seitenschenkels 13. Der Motor 39c treibt über ein Ritzel 40c eine Zahnschiene 41 an, die sich längs des Tragschenkels 26, insbesondere in dessen Innenraum, erstreckt. Das Ritzel 40c kämmt mit der Zahnschiene 41, so dass durch ein Drehen des Motors 39c die Zahnschiene 41 angetrieben wird. Dadurch verfährt der Schlitten bzw. das Tragegestell 25 linear. Weiterhin ist die Schiebebewegung jedoch einer Schwenkbewegung überlagert (wegen des Lenkhebels 43), so dass der Tragschenkel 26 bzw. die Zahnschiene 41 um das Ritzel 40c schwenkt. Das Ritzel 40c bildet also beispielsweise eine Rolle in der Art der Rolle 47.

Es ist auch ein Zahnriemenantrieb möglich, bei dem beispielsweise das Ritzel 40c auf einen Zahnriemen wirkt, der anstelle der Zahnstange 41 vorgesehen sein könnte.

Selbstverständlich ist es zweckmäßig, dass zwischen jedem Seitenschenkel 13 und Tragschenkel 26 jeweils eine Lageranordnung 23b, 23c einschließlich eines Lenkhebels 43 vorhanden ist, was eine optimale Lagerung ermöglicht. Weiterhin kann an einem oder beiden Seitenschenkeln 13 bzw. Tragschenkeln 26 ein Lastentragteil-Antrieb vorhanden sein. Es ist ferner denkbar, dass ein Lastentragteil-Antrieb ein Übertragungselement umfasst, beispielsweise eine Welle 51, so dass mit dem Motor 39c nicht nur ein Ritzel 40c, sondern auch ein weiteres Ritzel oder ein sonstiges Getriebeteil betätigbar ist. In nicht dargestellter Weise ist dann beispielsweise im in der Zeichnung rechten Tragschenkel 26 ebenfalls eine Zahnschiene 41 angeordnet.

Die Stütze 33 kann ein erfindungsgemäß angetriebenes Lastentragteil sein, das bezüglich des Lastentragteils 22b, 22c motorisch verstellbar ist. Z.B. ist an einem oder beiden Schwenklagern 34 ein z.B. einen elektrischen Motor umfassender Lastentragteil-Antrieb 91 vorgesehen, der die Stütze 33 zwischen der dargestellten Gebrauchsstellung G und einer zu den Tragschenkeln 26 hin verstellten Nichtgebrauchsstellung N verstellen kann.

Beim Lastenträger 10d treibt der Lastentragteil-Antrieb 24d die Stützrinnen 31 an. Aus Gründen der Vereinfachung ist nur ein Lastentragteil-Antrieb 24d dargestellt, der die in der Zeichnung rechten Stützrinnen 31 betätigt, wobei selbstverständlich auch für die beiden linken Stützrinnen 31 ein solcher Antrieb vorgesehen sein kann. Bei dem Lastentragteil-Antrieb 24d handelt es sich um einen Motor, nämlich einen Direktantrieb, der über eine nicht dargestellte Antriebswelle, die an seinen Stirnseiten vor sein Gehäuse vorsteht, mit den Stützrinnen 31 drehfest verbunden ist, um diese zwischen der in der Zeichnung dargestellten Nutzstellung und einer zwischen die Tragschenkel 26 hinein verstellten Nichtgebrauchsstellung zu verstellen.

Anstelle des als Schwenkantriebs ausgestalteten Lastentragteil-Antriebs 24d könnte auch ein Linearantrieb (Pfeil x) vorgesehen sein, der die Stützrinnen 31 linear verfährt. Ferner ist auch ein Seilzugantrieb möglich, der auf eine oder mehrere Stützrinnen 31 wirkt, z.B. unidirektional entgegen der Kraft einer Federanordnung, oder bidirektional mit einander entgegengesetzt wirksamen Seilzügen.

Zur Steuerung des Lastentragteil-Antriebs 24d dient eine Steuerung 52, die beispielsweise den Lastentragteil-Antrieb 24d beim Erreichen einer jeweiligen Endstellung der Stützrinne 31 abschaltet. Weiterhin ist eine Sicherheitsfunktion bei der Steuerung 52 zweckmäßig. So kann die Steuerung 52 beispielsweise erkennen, ob auf den Stützrinnen 31 eine Last abgestellt ist. Dies ist beispielsweise dadurch möglich, dass der (Elektro-) Motor 39d kurzzeitig bestromt wird. Wenn der Stromfluss höher ist als derjenige, der nur zum Verstellen der Stützrinnen 31 notwendig ist, ermittelt die Steuerung 52 daraus, dass eine Last auf den Stützrinnen 31, mithin also auf den Lastentragteilen 22d, aufliegt.

Eine dort befindliche Last kann nebenbei bemerkt mittels Riemen 53 gesichert werden, die in Halter 54 eingesteckt und dort vorzugsweise in der Art einer Ratsche verrastet werden.

Weiterhin ist es möglich, dass die Steuerung 52 beispielsweise anhand von Abstandssensoren 55 nicht nur den in Fahrtrichtung hinteren Bereich H des Lastenträgers 10d erfasst, sondern auch den Lastbereich bzw. den Tragbereich T des Lastenträgers 10d. Wenn sich dort also beispielsweise eine Last befindet, z.B. Fahrräder, lässt die Steuerung 52 ein Schwenken oder Verstellen der Stützrinnen 31 bzw. der Lastentragteile 22d nicht zu.

Die vorliegend elektrischen Lastentragteil-Antriebe 24a-24e werden vorzugsweise von einem Bordnetz 84 des Fahrzeugs 80 mit Energie, d.h. mit Strom, versorgt. Selbstverständlich wären auch fluidische, beispielsweise pneumatische Lastentragteil-Antriebe möglich, was jedoch bei den Ausführungsbeispielen nicht realisiert ist. Beispielsweise ist ein Steckverbinder 56 des Lastenträgers 10d (bei den anderen Lastenträgern ist das auch möglich), in eine Anhängersteckdose 85 des Fahrzeugs 80 eingesteckt, um von dort mit Strom und zweckmäßigerweise auch mit Steuersignalen versorgt zu werden. Somit ist also eine Verbindung zum Bordnetz 84 des Fahrzeugs 80 hergestellt. Der Steckverbinder 56 ist über ein Kabel 57 mit der Steuerung 52 und diese wiederum in nicht dargestellter Weise elektrisch mit dem Lastentragteil-Antrieb 24d verbunden.

Bei dem Steuersignal, das die Steuerung 52 vom Bordnetz 84 empfängt, kann es sich beispielsweise um ein Bus-Signal bzw. eine Bus-Information von einem fahrzeugseitigen Bus, z.B. einen CAN-Bus, handeln. Wenn also beispielsweise signalisiert ist, dass die Türen des Fahrzeugs 80 geöffnet sind (Zentralverriegelung auf) heißt das, dass das Fahrzeug 80 steht, zumindest bei einer entsprechenden Programmierung des Fahrzeugs 80. Dann kann ein Bediener beispielsweise durch eine Druckbetätigung eines Schalters 42 die Steuerung 52 zum Ansteuerung des Lastentragteil-Antriebs 24d betätigen.

Ein innovatives Bedienkonzept kann vorsehen, dass beispielsweise durch eine vorbestimmte Betätigung der Abstandssensoren 55 die Steuerung 52 einen Bedienbefehl erhält, um den Lastentragteil-Antrieb 24d zu betätigen bzw. mit Strom zu versorgen. Wenn also beispielsweise die Abstandssensoren 55 mit einer vorbestimmten Bediensequenz angesteuert werden, z.B. durch ein Schwenken einer Hand vor einem oder mehreren der Abstandssensoren 55, steuert die Steuerung 52 den Lastentragteil-Antrieb 24d zum Verstellen der Stützrinnen 31 bzw. der Lastentragteile 22d an. Selbstverständlich kann dies auch in Abhängigkeit von einem Abstand des ansteuernden Körpers relativ zu einem oder mehreren der Abstandssensoren 55 abhängen.

Weiterhin ist ein drahtloses Bedienkonzept möglich, bei dem beispielsweise ein Sender 58 einen in der Zeichnung nicht sichtbaren Empfänger der Steuerung 52 per Funk, Ultraschall, Infrarot oder in anderer Weise drahtlos ansteuert, um den Lastentragteil-Antrieb 24d zu schalten. Hier ist es besonders zweckmäßig, wenn das nur in einem relativ kurzen Nahbereich möglich ist, so dass eine Fehlbedienung oder eine Verletzung einer Person, die der Bediener nicht sieht, weil er zu weit vom Lastenträger entfernt ist, nicht zu befürchten ist.

Weiterhin können die Abstandssensoren 55 auch dazu genutzt werden, die Steuerung 52 quasi zu blockieren. Wenn sich also ein Gegenstand, z.B. eine Person, ein sonstiges Hindernis oder dergleichen, in der Nähe eines oder mehrerer der Abstandssensoren 55 befindet, lässt die Steuerung 52 eine Ansteuerung bzw. ein Fahren des Lastentragteil-Antriebs 24d nicht zu. Dies mag zwar bei den Stützrinnen 31 noch unproblematisch sein. Wenn jedoch ein Schlitten verfahren wird, ähnlich wie beim Lastenträger 10a, oder ein Tragegestell 25 wie bei den Lastenträgern 10b und 10c verfahren wird, ist es vorteilhaft, wenn der jeweilige Lastentragteil-Antrieb 24a-24d nur dann in einem antreibenden Sinne aktiv ist, wenn kein Hindernis im Stellweg des Lastentragteils ist. Eine erfindungsgemäße Steuerung und/oder in der obigen Art genutzte Abstandssensoren sind zweckmäßigerweise so ausgestaltet, dass sie ein Fahren des Lastentragteil-Antriebs nur dann blockieren, wenn sich ein Hindernis im Stellweg des Lastentragteils befindet, nicht jedoch, wenn ein gefahrloser Betrieb möglich ist.

Es versteht sich, dass über die in der Zeichnung beispielhaft dargestellten Abstandssensoren 55 hinaus auch weitere Sensoren, insbesondere auch Ultraschallsensoren, vorgesehen sein können.

Der Lastenträger 10e zeigt beispielhaft, dass auch ein Dreh-Direktantrieb möglich ist. Der Lastentragteil-Antrieb 24e umfasst beispielsweise einen Elektromotor, der direkt in der Schwenkachse des Tragegestells 25 relativ zur Tragbasis 11 antreibt. Der Lastentragteil-Antrieb 24e kann beispielsweise ein Planetengetriebe umfassen, insbesondere ein selbsthemmendes Planetengetriebe. Es ist vorteilhaft, wenn zwischen beiden Seitenschenkeln 13 und Tragschenkeln 26 jeweils ein Motor 39e vorhanden ist, so dass das Tragegestell 25 sich beim Schwenken in die Nichtgebrauchsstellung oder die Arbeitsstellung nicht oder nur wenig verwindet.

Alternativ ist auch ein Linearantrieb 76 möglich, z.B. ein elektrischer Spindelantrieb, ein fluidischer, insbesondere ein pneumatischer oder hydraulischer, Hubzylinder etc.. Der Linearantrieb 76 ist z.B. mit Schwenklagern 77 linear festgelegt, jedoch schwenkbar an dem Lastentragteil 22e und der Tragbasis 11 gelagert ist.

Weiterhin hat der Lastenträger 10e vorteilhaft auch eine Steuerung 52 zur Ansteuerung des Lastentragteil-Antriebs 24e. Die Steuerung 52 ist beispielsweise über Kabel 60 mit den Motoren 39e verbunden.

Eine vorteilhaft vorhandene Funktionsanzeigeeinrichtung 59, die z.B. einen Signallautsprecher 59a, ein Leuchtmittel 59b oder dergleichen umfasst, ist während des Betriebs des Lastentragteil-Antriebs 24e aktiv, so dass ein Bediener beispielsweise durch optische Signale (Leuchten), durch Warntöne oder dergleichen gewarnt wird, so dass er sich bei dem motorischen Verstellen des Lastentragteils 22e nicht verletzt.

Eine zusätzliche Sicherheitsmaßnahme stellt es dar, wenn das Lastentragteil eines erfindungsgemäßen Lastenträgers mittels einer Halteeinrichtung, z.B. einen Riegel oder dergleichen, verriegelbar ist, insbesondere in der Gebrauchsstellung G. Beispielsweise ist an der Tragbasis 11 des Lastenträgers 10e eine Halteeinrichtung 61 zum Halten des Tragegestells 25, also des Lastentragteils 22e, in der Gebrauchsstellung G vorhanden. Die Halteeinrichtung 61 umfasst einen Riegel 62, der in der Gebrauchsstellung G in eine Aufnahme 62a, z.B. eine Bohrung, ein Loch oder dergleichen, am Lastentragteil 22e eingreift. Vorzugsweise ist der Riegel 62 in seine Verriegelungsstellung federbelastet. Es kann aber auch, insbesondere zum Entriegeln, jedoch auch zum Verriegeln, ein Halteantrieb 63 vorgesehen sein mit dem der Riegel 62 in seine Verriegelungsstellung und/oder seine Entriegelungsstellung verfahren werden kann. Selbstverständlich ist die Steuerung 52 zweckmäßigerweise so ausgestaltet, so dass sie zunächst die Halteeinrichtung 61 zum Entriegeln und anschließend den Lastentragteil-Antrieb 24e zum Fahren ansteuert, was eine Überhitzung verhindert.

Aufgrund der vorzugsweise selbsthemmenden Getriebe, die bei den Lastentragteil-Antrieben 24e vorhanden sind, ist jedoch die Halteeinrichtung 61 nur eine zusätzliche Maßnahme. Ansonsten ist sie jedoch sehr vorteilhaft.

Weiterhin ist es denkbar, dass die Steuerung 52 die Motoren 39e beispielsweise periodisch in Richtung der Gebrauchsstellung des Lastentragteiles 22e antreibt, so dass sichergestellt ist, dass sich das Lastentragteil 22e bzw. das Tragegestell 25 bei einem Fahrbetrieb des Fahrzeuges 80 an der Tragbasis 11 befindet, vorliegend also nicht nach hinten weggeschwenkt ist.

Selbsthemmende Getriebe sind auch bei den Lastentragteil-Antrieben 24f und 24g der Lastenträger 10f, 10g vorhanden.

Beispielsweise umfassen die Lastentragteil-Antriebe 24f, 24g jeweils einen Linearantrieb 64f, 64g. Die Linearantriebe 64f, 64g können z.B. fluidische, insbesondere pneumatische Zylinder, umfassen, haben beim Ausführungsbeispiel jedoch elektrische Motoren 39f, 39g, mit denen Spindeln 65f, 65g antreibbar sind. Die Spindeln 65f, 65g können zweckmäßigerweise aus einem Gehäuse 90 der Motoren 39f, 39g ausfahren bzw. in dieses hinein. Im Inneren des Gehäuses 90 ist nicht dargestellt beispielweise eine durch den Motor 39f, 39g angetriebene Spindelmutter. Eine Steigung der Spindel 65 ist vorzugsweise selbsthemmend ausgelegt, so dass eine jeweilige Längsposition der Spindel 65f, 65g zum Gehäuse des Motors 39f, 39g auch ohne Bestromung des Motors 39f, 39g beibehalten wird.

Die Linearantriebe 64f, 64g sind mittels Schwenklagern 66f, 66g schwenkbeweglich am Lastentragteil 22f, 22g angeordnet. Diese sind beispielsweise Tragegestelle 25, die schwenkbeweglich mittels ihrer Lageranordnungen 23f, 23g an der Tragbasis 11f, 11g gelagert sind.

Die Linearantriebe 64f, 64g sind am vom Schwenklager 66f, 66g entfernten Längsende ebenfalls schwenkbeweglich gelagert, nämlich mit Schwenklagern 67f, 67g. Das Schwenklager 67f befindet sich an der Tragbasis 11f, beispielsweise am Grundschenkel 12 oder an einem der Seitenschenkel 13. Das Schwenklager 67g ist am Fahrzeug 80, insbesondere an einem Bauteil des Lastenträger 10g, z.B. der Führungsbasis 20g ortsfest festgelegt. Das Schwenklager 67g ist z. B. an einer Querstrebe 78 zwischen den Führungsschienen 21 angeordnet.

Wenn also der Lastentragteil-Antrieb 24f betätigt wird, sich also der Linearantrieb 64f streckt oder zusammenzieht, schwenkt das Lastentragteil 22f relativ zur Tragbasis 11f. Das Schwenklager 66f und die Lageranordnung 23f sind an einander entgegensetzen Längsendbereichen des Lastentragteils 22f angeordnet.

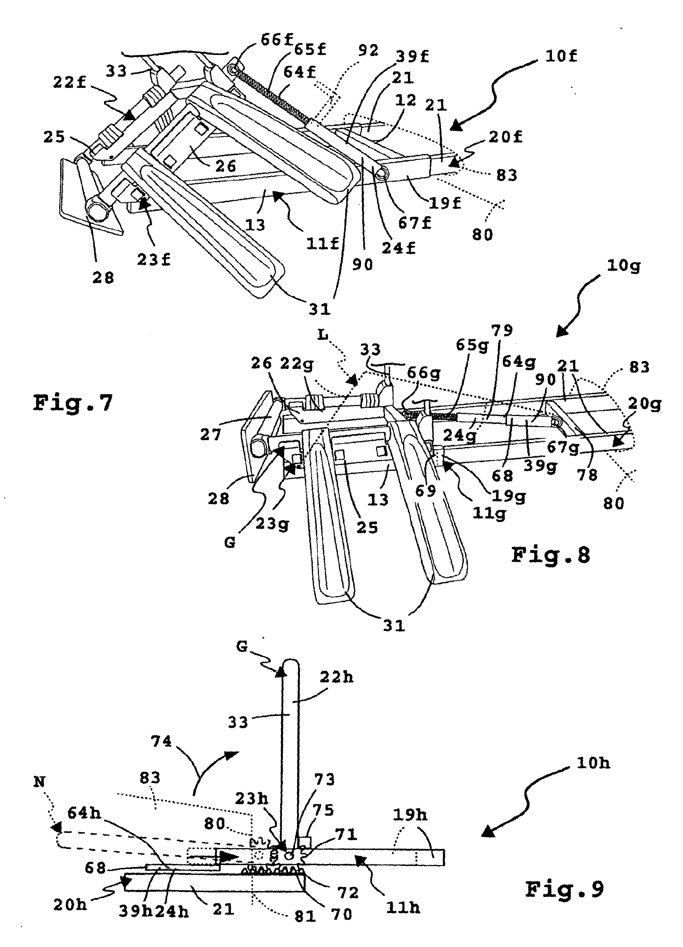

Der Lastentragteil-Antrieb 24g dient nicht nur zum Verstellen des Lastentragteils 22g zwischen der zur Tragbasis 11g hin verschwenkten Gebrauchsstellung G oder einer davon weg verstellten Ladestellung L, die in gestrichelten Linien angedeutet ist, sondern ist zugleich ein Tragbasis-Antrieb 68 zum Verstellen der Tragbasis 11g zwischen der in die Lastenträgeraufnahme 83 hinein verstellten Nichtgebrauchsstellung N oder die vom vor das Heck 81 vorverstellte oder herausgefahrene Position, die in Figur 8 dargestellt ist. Wenn der Tragbasis-Antrieb 68 ausfährt, sich quasi verlängert, schiebt er den Schlitten bzw. die Tragbasis 11g zunächst nach hinten außen vor das Heck 81 vor. Dann schlägt die Tragbasis 11g, also der Schlitten an einem Anschlag 69 an. Wenn nun der Tragbasisantrieb 68 bzw. der Lastentragteil-Antrieb 24g weiterfährt, sich also weiter "streckt", wird die Kippbewegung oder Schwenkbewegung des Lastenaufsatzes bzw. Lastentragteils 22g eingeleitet, so dass sich dieses in die Ladestellung L nach hinten schräg aufstellt.

Damit der Linearantrieb 64f, 64g in seiner kurzen oder eingefahrenen Position kompakt ist, kann er zweckmäßigerweise teleskopierbar sein. Z.B. weist der Linearantrieb 64g einen Teleskopabschnitt 79 auf.

Es versteht sich, dass ein erfindungsgemäßer Antrieb auch ein manueller Antrieb sein kann. So könnte z.B. der Lastentragteil-Antrieb 24f mittels einer Handkurbel 92, einem vorstehenden Handgriff oder dergleichen verstellbar sein. Ein elektrischer Antrieb ist dann nicht nötig. Eine Handbetätigung kann auch für einen Notbetrieb eines motorischen Lastentragteil-Antriebs vorgesehen sein. Eine solche Handhabe, beim Ausführungsbeispiel z.B. die Handkurbel 92, ist zweckmäßigerweise vom Antrieb insbesondere werkzeuglos abnehmbar oder in eine Nichtgebrauchsstellung verstellbar, z.B. zum Gehäuse 79 hin schwenkbar oder klappbar. Auch bei einem manuell betätigbaren Antrieb sind vorteilhafte Wirkungen vorhanden, so z.B. eine geringere Bedienkraft und/oder dass eine zusätzliche Klemmung oder Verriegelung entbehrlich ist. Z.B. kann dazu die Selbsthemmung der Spindeln 65f, 65g genutzt werden.

Ein weiteres Ausführungsbeispiel dafür, dass ein Tragbasis-antrieb 68 zugleich einen Lastentragteil-Antrieb bilden kann, ist beim Lastenträger 10h schematisch dargestellt. Gegenüber der fahrzeugseitigen Führungsbasis 20h ist die Tragbasis 11h in der Art eines Schlittens ausfahrbar. Hierfür umfasst der Tragbasis-Antrieb 68 beispielsweise einen Linearantrieb 64h. Dieser Linearantrieb 64h bildet zugleich einen Lastentragteil-Antrieb 24h, zu dem auch ein Umlenkgetriebe 70 gehört. Das Umlenkgetriebe 70 umfasst einen Zahnkranz 71, der unten am Lasttragteil 22h angeordnet ist. Dieses ist beispielsweise ein Haltebügel in der Art des Haltebügels 36, eine Stütze oder dergleichen. Gestrichelt ist in Figur 9 eine Nichtgebrauchsstellung N des Lastentragteils 22h dargestellt, so dass dieses in eine Lastenträgeraufnahme 83 am Heck 81 des Fahrzeugs 80 passt. Wenn also der Schlitten bzw. die Tragbasis 11h nach innen in das Heck 81 hinein, d.h. in die Lastenträgeraufnahme 83 hinein verschoben wird, wobei der Tragbasis-Antrieb 68 den Schlitten bzw. die Tragbasis 11h zieht, nimmt das Lastentragteil 22h die im Wesentlichen horizontale gestrichelte Stellung ein. Beim Ausfahren jedoch kämmt der Zahnkranz 71 mit einer Zahnschiene 72, die fahrzeugfest ist, beispielsweise an der Führungsbasis 20h angeordnet ist. Dadurch schwenkt das Lastentragteil 22h um eine Achse 73 seiner Lageranordnung 23h nach oben, was durch einen Pfeil 74 angedeutet ist. Die Achse 73 ist beispielsweise drehbar an der Tragbasis 11, z.B. Seitenschenkeln derselben, gelagert.

Zweckmäßigerweise ist noch ein Anschlag 75 vorhanden, gegen den das Lastentragteil 22h in seiner Gebrauchsstellung G anschlägt. Der Anschlag 75 kann also zugleich die Funktion eines Anschlages für das Lastentragteil 22h bilden, so dass dieses einerseits eine Krafteinwirkung vom zweckmäßigerweise ein selbsthemmendes Getriebe umfassenden Lastentragteil-Antrieb 24h erhält, zum anderen auch die Funktion eines Anschlages für den Schlitten bzw. die Tragbasis 11h als solche. Der Schlitten kann also nicht mehr weiter aus der Lastenträgeraufnahme 83 heraus bzw. von der Führungsbasis 20h weg verstellt werden, wenn das Lastentragteil 22h am Anschlag 75 anschlägt.

## Patentansprüche

1. Lastenträger für ein Fahrzeug (80), insbesondere einen Personenkraftwagen, mit einer Tragbasis (11; 11f-11h), an dem mindestens ein Lastentragteil (22a-22h) zum Tragen einer Last mittels einer Lageranordnung (23a-23h) beweglich gelagert ist, wobei der Lastenträger einen manuellen und/oder motorischen, insbesondere elektrischen und/oder fluidischen, Lastentragteil-Antrieb (24a-24h) zum Verstellen des mindestens einen Lastentragteils (22a-22h) relativ zu der Tragbasis (11; 11f-11h) aufweist, **dadurch gekennzeichnet, dass** das mindestens eine Lastentragteil (22a-22h) an einem Bauteil, insbesondere einem Tragegestell (25), beweglich gelagert ist, das seinerseits beweglich an der Tragbasis (11; 11f-11h) gelagert ist, insbesondere motorisch verstellbar ist.

2. Lastenträger nach Anspruch 1, **dadurch gekennzeichnet, dass** das mindestens eine Lastentragteil (22a-22h) in einer zum Auflegen einer Last vorgesehenen Gebrauchsstellung (G) näher bei der Tragbasis (11; 11f-11h) ist als in einer für einen Nichtgebrauch, insbesondere zum Verstauen des Lastenträgers, vorgesehenen Nichtgebrauchsstellung (N).

3. Lastenträger nach Anspruch 1 oder 2, **dadurch gekennzeichnet, dass** die Tragbasis (11; 11f-11h) in einer Gebrauchsstellung (G) bei am Fahrzeug (80) montiertem Lastenträger zum Tragen der Last vor ein Heck (81) des Fahrzeugs (80) ganz oder zumindest teilweise vorsteht und/oder dass die Lageranordnung (23a-23h) mindestens ein Schwenklager und/oder Schiebelager (46) umfasst und das mindestens eine Lastentragteil (22a-22h) gegenüber der Tragbasis (11; 11f-11h) schwenkbar und/oder linear beweglich lagert.

4. Lastenträger nach einem der vorhergehenden Ansprüche, **dadurch gekennzeichnet, dass** der Lastentragteil-Antrieb (24a-24h) ein Handbetätigungselement umfasst und/oder dass der Lastentragteil-Antrieb (24a-24h) zum insbesondere simultanen Antreiben von mindestens zwei Lastentragteilen (22a-22h) ausgestaltet ist und/oder dass der Lastentragteil-Antrieb (24a-24h) einen elektrischen oder fluidischen Direktantrieb und/oder ein insbesondere selbsthemmendes Getriebe umfasst, wobei das Getriebe zweckmäßigerweise eine Zahnschienenanordnung (41) und/oder einen Spindeltrieb und/oder ein Seilzuggetriebe und/oder ein Kettengetriebe umfasst.

5. Lastenträger nach einem der vorhergehenden Ansprüche, **dadurch gekennzeichnet, dass** die Tragbasis (11; 11f-11h) ein Basisgestell umfasst oder bildet und/oder das mindestens eine Lastentragteil (22a-22h) ein Tragegestell (25) umfasst oder bildet und/oder dass das mindestens eine Lastentragteil (22a-22h) in einer zu einem Fahrbetrieb vorgesehenen Fahrstellung (F) auf der Tragbasis (11; 11f-11h) an mindestens einer Stützstelle, die einen Abstand zu der Lageranordnung (23a-23h) aufweist, abgestützt ist.

6. Lastenträger nach einem der vorhergehenden Ansprüche, **dadurch gekennzeichnet, dass** das mindestens eine Lastentragteil (22a-22h) einen Stützrinne (31) zum Tragen eines Fahrrades und/oder eine Stütze (33) zum Stützen der Last und/oder einen insbesondere u-förmigen Haltebügel (36) zum Halten der Last und/oder eine Trägerplatte umfasst und/oder dass an dem mindestens einen Lastentragteil (22a-22h) mindestens eine Stütze (33) zum Abstützen der Last beweglich gelagert ist.

7. Lastenträger nach einem der vorhergehenden Ansprüche, **dadurch gekennzeichnet, dass** das mindestens eine Lastentragteil (22a-22h) in der Art eines Schlittens (19) an der Tragbasis (11; 11f-11h) beweglich gelagert ist, wobei die Tragbasis (11; 11f-11h) eine Schlitten-Führungsbasis (38) bildet und das mindestens eine Lastentragteil (22a-22h) in einer zu einem Fahrbetrieb vorgesehenen Fahrstellung (F) näher bei der Tragbasis (11; 11f-11h) angeordnet ist und in einer insbesondere zum Beladen und Entladen des Fahrzeugs (80) vorgesehenen Ladestellung (L) weiter von der Tragbasis (11; 11f-11h) entfernt ist.

8. Lastenträger nach einem der vorhergehenden Ansprüche, **dadurch gekennzeichnet, dass** er einen lösbaren elektrischen Anschluss, insbesondere einen Steckverbinder (56) für eine Anhängersteckdose (85), zur elektrischen Verbindung mit einem Bordnetz (85) des Fahrzeugs (80) aufweist und/oder dass er einen Empfänger für mindestens ein über das Bordnetz (85) des Fahrzeugs (80) empfangenes elektrisches Signal aufweist und der Lastentragteil-Antrieb (24a-24h) in Abhängigkeit von dem mindestens einen elektrischen Signal schaltbar ist.

9. Lastenträger nach einem der vorhergehenden Ansprüche, **dadurch gekennzeichnet, dass** er einen Empfänger zur drahtlosen Ansteuerung des Lastentragteilantriebs (22a-22h) aufweist und/oder dass der Lastentragteil-Antrieb (24a-24h) zumindest teilweise in einem Gestellbauteil, insbesondere einem Profilteil (14) oder einem Rohrteil, aufgenommen ist.

10. Lastenträger nach einem der vorhergehenden Ansprüche, **dadurch gekennzeichnet, dass** er einen Tragbasis-Antrieb (68) zum Verstellen der Tragbasis (11; 11f-11h) zwischen einer ersten Stellung und einer zweiten Stellung, insbesondere zwischen einer Gebrauchsstellung (G), in der die Tragbasis (11; 11f-11h) bei am Fahrzeug (80) montiertem Lastenträger zum Tragen einer Last vor ein Heck (81) des Fahrzeugs (80) vorsteht, und einer Nichtgebrauchsstellung (N), in der die Tragbasis (11; 11f-11h) zumindest teilweise in einer Lastenträger-Aufnahme des Fahrzeugs (80) aufgenommen ist, aufweist.

11. Lastenträger nach einem der vorhergehenden Ansprüche, **dadurch gekennzeichnet, dass** der Lastentragteil-Antrieb (24a-24h) zumindest ein Übertragungsgetriebe (70), insbesondere ein Zahngetriebe oder ein Keilgetriebe oder Seilgetriebe, zum Koppeln einer Bewegung des mindestens einen Lastentragteils (22a-22h) mit einer Bewegung der Tragbasis (11; 11f-11h) umfasst, so dass bei einem Verstellen der Tragbasis (11; 11f-11h) das mindestens eine Lastentragteil (22a-22h) mitgenommen wird.

12. Lastenträger nach einem der vorhergehenden Ansprüche, **dadurch gekennzeichnet, dass** er eine mindestens ein Halteglied aufweisende Halteeinrichtung (61) aufweist, die in einer Haltestellung das mindestens eine Lastentragteil (22a-22h) in mindestens einer Stellung bezüglich der Tragbasis (11; 11f-11h) hält und in einer Freigabestellung das mindestens eine Lastentragteil (22a-22h) zu einer Verstellung bezüglich der Tragbasis (11; 11f-11h) freigibt.

13. Lastenträger nach einem der vorhergehenden Ansprüche, **dadurch gekennzeichnet, dass** er eine Steuerung (52) aufweist, die den Lastentragteil-Antrieb (24a-24h) zum Verstellen des mindestens einen Lastentragteils (22a-22h) in mindestens eine Stellung, insbesondere eine Endstellung, periodisch abhängig von einer Erstbetätigung durch den Lastentragteilantrieb-Schalter (42) in die mindestens eine Stellung wiederholt mit Energie versorgt, insbesondere bestromt, und/oder dass er eine Steuerung (52) zur Aktivschaltung und/oder Deaktivierung des Lastentragteil-Antriebs (24a-24h) und/oder des Lastentragteilantrieb-Schalters (42) anhand mindestens einer Aktivierungsbedingung aufweist.

14. Lastenträger nach Anspruch 13, **dadurch gekennzeichnet, dass** die Steuerung (52) einen Sensoreingang, insbesondere für einen Abstandsensor (55), und/oder einen Sensor aufweist und zur Auswertung eines Sensorsignals des Sensors als Aktivierungsbedingung ausgestaltet ist und/oder dass die mindestens eine Aktivierungsbedingung ein Unterschreiten einer Grenzgeschwindigkeit des Fahrzeugs (80), insbesondere ein Stillstand des Fahrzeugs (80), und/oder einen Stillstand eines Fahrzeug-Motors des Fahrzeugs und/oder eine Bedingung "Fahrzeugtüren-Entriegelt" und/oder "Heckklappe-Entriegelt" umfasst und/oder dass die mindestens eine Aktivierungsbedingung ein von einem Freigabeschalter sendbares Freigabesignal ist und/oder dass die mindestens eine Aktivierungsbedingung ein Signal "kein Hindernis im Bewegungsbereich des anzutreibenden Lastentragteils".

15. Lastenträger nach einem der vorhergehenden Ansprüche, **dadurch gekennzeichnet, dass** er mindestens eine optische und/oder akustische Funktionsanzeigeeinrichtung (59) für mindestens eine Funktionsanzeige des Lastentragteil-Antriebs (24a-24h) und/oder mindestens einen Signalausgang zur Ansteuerung einer Funktionsanzeigeeinrichtung (59) des Fahrzeugs (80) aufweist und/oder dass er eine insbesondere an der Tragbasis (11; 11f-11h) angeordnete Befestigungseinrichtung (16) zum lösbaren Befestigen an dem Fahrzeug (80), insbesondere einer Anhängekupplung (82) des Fahrzeugs (80), aufweist oder dass die Tragbasis (11; 11f-11h) an einer Fahrzeug-Lageranordnung beweglich gelagert ist.

## Claims

1. Load carrier for a vehicle (80), in particular a car, with a support base (11; 11f-11h) on which at least one load carrying part (22a-22h) for carrying a load is movably mounted by means of a bearing assembly (23a-23h), wherein the load carrier has a manual and/or powered, in particular electrical and/or fluidic, load carrying part drive (24a-24h) for adjusting the load carrying part or parts (22a-22h) relative to the support base (11; 11f-11h), **characterised in that** the load carrying part or parts (22a-22h) is or are movably mounted on a component, in particular a support frame (25), which in turn is mounted movably on the support base (11; 11f-11h), in particular with a powered movement facility.

2. Load carrier according to claim 1, **characterised in that** the load carrying part or parts (22a-22h) is or are closer to the support base (11; 11f-11h) in a position of use (G) provided for the placing of a load than in an inoperative position (N) provided for when it or they are not in use, in particular for stowing away of the load carrier.

3. Load carrier according to claim 1 or 2, **characterised in that** the support base (11; 11f-11h), in a position of use (G) with the load carrier for carrying a load mounted on the vehicle (80), extends wholly or at least partly beyond a rear (81) of the vehicle (80) and/or that the bearing assembly (23a-23h) includes at least one swivel bearing and/or sliding bearing (46), and the load carrying part or parts (22a-22h) are mounted so as to be pivotable and/or capable of linear movement relative to the support base (11; 11f-11h).

4. Load carrier any of the preceding claims, **characterised in that** the load carrying part drive (24a-24h) includes a manual actuation element and/or that the load carrying part drive (24a-24h) is designed for the driving, in particular simultaneously, of at least two load carrying parts (22a-22h) and/or that the load carrying part drive (24a-24h) comprises an electrical or fluidic direct drive and/or a gear, in particular irreversible, wherein the gear comprises expediently a toothed rack arrangement (41) and/or a spindle drive and/or a cable mechanism and/or a chain drive.

5. Load carrier according to any of the preceding claims, **characterised in that** the support base (11; 11f-11h) includes or forms a base frame and/or that at least one load carrying part (22a-22h) includes or forms a support frame (25) and/or that at least one load carrying part (22a-22h) is supported on the support base (11; 11f-11h), in a vehicle running position (F) provided for vehicle operation, on at least one support point which has clearance from the bearing assembly (23a-23h).

6. Load carrier according to any of the preceding claims, **characterised in that** the load carrying part or parts (22a-22h) has or have a support channel (31) for carrying a cycle and/or a support (33) for supporting the load, and/or a retaining bracket (36), in particular U-shaped, for holding the load, and/or include a carrier plate and/or that at least one support (33) for supporting the load is movably mounted on the load carrying part or parts(22a-22h).

7. Load carrier according to any of the preceding claims, **characterised in that** the load carrying part or parts(22a-22h) is or are movably mounted on the support base (11; 11f 11h) in the manner of a carriage (19), wherein the support base (11; 11f-11h) forms a carriage guide base (38) and the load carrying part or parts (22a-22h) is or are located closer to the support base (11; 11f-11h) in a vehicle running position (F) provided for vehicle operation and is or are located further away from the support base (11; 11 f-11 h) in a loading position (L) provided for loading and unloading the vehicle (80).

8. Load carrier according to any of the preceding claims, **characterised in that** it has a releasable electrical connection, in particular a push-on connector (56) for a trailer socket (85), for electrical connection with an onboard power supply (85) of the vehicle (80), and/or that it has a receiver for one or more electrical signals received over the onboard power supply (85) of the vehicle (80), and the load carrying part drive (24a-24h) may be switched according to the electrical signal or signals.

9. Load carrier according to any of the preceding claims, **characterised in that** it has a receiver for the wireless activation of the load carrying part (22a-22h), and/or that the load carrying part drive (24a-24h) is held at least partly in a frame component, in particular a profile section (14) or a tubular section.

10. Load carrier according to any of the preceding claims, **characterised in that** it has a support base drive (68) for adjusting the support base (11; 11f-11 h) between a first position and a second position, in particular between a position of use (G) in which the load carrier for carrying a load mounted on the vehicle (80) extends beyond a rear (81) of the vehicle (80), and an inoperative position (N) in which the support base (11; 11f-11h) is accommodated at least partly in a load carrier holder of the vehicle (80).

11. Load carrier according to any of the preceding claims, **characterised in that** the load carrying part drive (24a-24h) includes at least one transmission gear (70), in particular a gear mechanism or a wedge mechanism or cable mechanism, for coupling a movement of the load carrying part or parts (22a-22h) to a movement of the support base (11; 11f-11 h), so that the carrying part or parts (22a-22h) is or are carried along during adjustment of the support base (11; 11f-11h).

12. Load carrier according to any of the preceding claims, **characterised in that** it has a holding fixture (61) with at least one holding element and which in a holding position holds the load carrying part or parts (22a-22h) in at least one position relative to the support base (11; 11f-11h) and in a release position releases the load carrying part or parts (22a-22h) for adjustment relative to the support base (11; 11f-11 h).

13. Load carrier according to any of the preceding claims, **characterised in that** it has a control unit (52) which in particular periodically and repeatedly supplies the load carrying part drive (24a-24h) with power for adjustment of the load carrying part or parts (22a-22h) into one or more positions, in particular an end position, depending on initial actuation by the load carrying part drive switch (42), and/or that it has a control unit (52) for activation and/or deactivation of the load carrying part drive (24a-24h) and/or the load carrying part drive switch (42) on the basis of at least one activation condition.

14. Load carrier according to claim 13, **characterised in that** the control unit (52) has a sensor input, in particular for a distance sensor (55), and/or a sensor, and is designed to evaluate a sensor signal of the sensor as activation condition, and/or that the activation condition or conditions includes/include failure to reach a limit speed of the vehicle (80), in particular the vehicle (80) coming to a stand, and/or stoppage of a vehicle motor of the vehicle, and/or a condition "vehicle doors unlocked" and/or "tailgate unlocked", and/or that the activation condition is a release signal which may be transmitted by a release switch, and/or that the activation condition is a signal "no obstruction in the movement range of the load carrying part to be driven".

15. Load carrier according to any of the preceding claims, **characterised in that** it has at least one optical and/or acoustic function display unit (59) for at least one function display of the load carrying part drive (24a-24h), and/or at least one signal output for the activation of a function display unit (59) of the vehicle (80), and/or that has a fastening device (16), located in particular on the support base (11; 11f-11h), for releasable fastening to the vehicle (80), in particular a trailer coupling (82) of the vehicle (80), or that the support base (11; 11f-11h) is mounted movably on a vehicle bearing assembly.

## Revendications

1. Support de charges pour un véhicule (80), en particulier pour une voiture automobile particulière, comprenant une base de support (11 ; 11f - 11 h), au niveau de laquelle est logée de manière mobile, au moyen d'un ensemble formant palier (23a - 23h), au moins une partie de support de charges (22a - 22h) servant à supporter une charge, sachant que le support de charges présente un mécanisme d'entraînement (24a - 24h) de la partie de support de charges manuel et/ou motorisé, en particulier électrique et/ou fluidique, servant à déplacer la partie de support de charges (22a - 22h) au moins au nombre de une par rapport à la base de support (11 ; 11f - 11 h), **caractérisé en ce que** la partie de support de charges (22a - 22h) au moins au nombre de une est logée de manière mobile au niveau d'un composant, en particulier au niveau d'un châssis de support (25), lequel est logé pour sa part de manière mobile au niveau de la base de support (11 ; 11f - 11 h), en particulier peut être déplacé de manière motorisée.

2. Support de charges selon la revendication 1, **caractérisé en ce que** la partie de support de charges (22a - 22h) au moins au nombre de une est plus proche de la base de support (11 ; 11f - 11 h) dans une position d'utilisation (G) prévue pour recevoir une charge que dans une position de non utilisation (N) ne se destinant pas à une utilisation, en particulier servant à ranger le support de charges.

3. Support de charges selon la revendication 1 ou 2, **caractérisé en ce que** la base de support (11 ; 11f - 11 h) fait saillie en totalité ou au moins en partie d'une partie arrière (81) du véhicule (80) dans une position d'utilisation (G) lorsque le support de charges est installé sur le véhicule (80), et/ou **en ce que** l'ensemble formant palier (23a - 23h) comprend au moins un palier de pivotement et/ou un palier de glissement (46) et loge, de manière à pouvoir pivoter et/ou de manière mobile linéairement par rapport à la partie de base (11 ; 11f - 11 h), la partie de support de charges (22a - 22h) au moins au nombre de une.

4. Support de charges selon l'une quelconque des revendications précédentes, **caractérisé en ce que** le mécanisme d'entraînement (24a - 24h) de la partie de support de charges comprend un élément d'actionnement manuel, et/ou **en ce que** le mécanisme d'entraînement (24a - 24h) de la partie de support de charges est configuré pour entraîner en particulier de manière simultanée au moins deux parties de support de charges (22a - 22h), et/ou **en ce que** le mécanisme d'entraînement (24a - 24h) de la partie de support de charges comprend un mécanisme d'entraînement direct électrique ou fluidique et/ou une transmission en particulier autobloquante, sachant que la transmission comprend de manière appropriée un ensemble de crémaillères (41) et/ou un entraînement à broche et/ou un mécanisme à câble de traction et/ou une transmission par chaîne.

5. Support de charges selon l'une quelconque des revendications précédentes, **caractérisé en ce que** la base de support (11 ; 11f - 11 h) comprend ou forme un châssis de base, et/ou **en ce que** la partie de support de charges (22a - 22h) au moins au nombre de une comprend ou forme un châssis de support (25), et/ou **en ce que** la partie de charge de supports (22a - 22h) au moins au nombre de une s'appuie dans une position de marche (F) prévue en mode de marche, sur la base de support (11 ; 11f - 11 h) au niveau au moins d'un emplacement d'appui, qui présente un espacement par rapport à l'ensemble formant palier (23a - 23h).

6. Support de charges selon l'une quelconque des revendications précédentes, **caractérisé en ce que** la partie de support de charges (22a - 22h) au moins au nombre de une comprend une rigole d'appui (31) servant à supporter une bicyclette et/ou un dispositif de soutien (33) servant à soutenir la charge et/ou un étrier de maintien (36) en particulier en forme de U servant à maintenir la charge et/ou une plaque de support, et/ou **en ce qu'**au moins un dispositif de soutien (33) servant à soutenir la charge est logé de manière mobile au niveau de la partie de support de charges (22a - 22h) au moins au nombre de une.

7. Support de charges selon l'une quelconque des revendications précédentes, **caractérisé en ce que** la partie de support de charges (22a - 22h) au moins au nombre de une est logée de manière mobile à la manière d'une glissière (19) au niveau de la base de support (11 ; 11 f - 11 h), sachant que la base de support (11 ; 11f - 11 h) forme une base de guidage à glissière (38) et que la partie de support de charges (22a - 22h) au moins au nombre de une est disposée davantage à proximité de la base de support (11 ; 11 f - 11 h) dans une position de marche (F) prévue aux fins d'un mode de marche et est davantage éloignée de la base de support (11 ; 11f -11h) dans une position de charge (L) prévue pour charger et décharger le véhicule (80).

8. Support de charges selon l'une quelconque des revendications précédentes, **caractérisé en ce qu'**il présente un raccordement électrique amovible, en particulier un connecteur (56) pour une prise de remorque (85) servant à établir une connexion électrique avec un réseau de bord (85) du véhicule (80), et/ou **en ce qu'**il présente un récepteur pour au moins un signal électrique reçu par l'intermédiaire du réseau de bord (85) du véhicule (80), et **en ce que** le mécanisme d'entraînement (24a - 24h) de la partie de support de charges peut être commuté en fonction du signal électrique au moins au nombre de un.

9. Support de charges selon l'une quelconque des revendications précédentes, **caractérisé en ce qu'**il présente un récepteur servant à commander sans fil le mécanisme d'entraînement de partie de support de charges (22a - 22h), et/ou **en ce que** le mécanisme d'entraînement (24a - 24h) de la partie de support de charges est reçu au moins en partie dans un composant de châssis, en particulier dans une partie profilée (14) ou dans une partie tubulaire.

10. Support de charges selon l'une quelconque des revendications précédentes, **caractérisé en ce qu'**il présente un mécanisme d'entraînement (68) de base de support servant à déplacer la base de support (11 ; 11f - 11 h) entre une première position et une deuxième position, en particulier entre une position d'utilisation (G), dans laquelle la base de support (11 ; 11f - 11 h) fait saillie d'une partie arrière (81) du véhicule (80) lorsque le support de charges servant à supporter une charge est installé sur le véhicule (80), et une position de non utilisation (N), dans laquelle la base de support (11 ; 11f - 11h) est reçue au moins en partie dans un logement de support de charges du véhicule (80).

11. Support de charges selon l'une quelconque des revendications précédentes, **caractérisé en ce que** le mécanisme d'entraînement (24a - 24h) de la partie de support de charges comprend au moins un mécanisme de transmission (70), en particulier une crémaillère ou une transmission à clavette ou une transmission par câble, servant à coupler un mouvement de la partie de support de charges (22a - 22h) au moins au nombre de une à un mouvement de la base de support (11 ; 11f - 11 h) de sorte que la partie de support de charges (22a - 22h) au moins au nombre de une est entraînée lors d'un déplacement de la base de support (11 ; 11f - 11 h).

12. Support de charges selon l'une quelconque des revendications précédentes, **caractérisé en ce qu'**il présente un système de maintien (61) présentant au moins un organe de maintien, lequel système de maintien maintient dans une position de maintien la partie de support de charges (22a - 22h) au moins au nombre de une dans une moins une position par rapport à la base de support (11 ; 11f - 11 h) et libère, dans une position de libération, la partie de support de charges (22a - 22h) au moins au nombre de une aux fins d'un déplacement par rapport à la base de support (11 ; 11f -11h).

13. Support de charges selon l'une quelconque des revendications précédentes, **caractérisé en ce qu'**il présente une commande (52), qui alimente de manière répétée en énergie, en particulier en courant, le mécanisme d'entraînement (24a - 24h) de la partie de support de charges servant à déplacer la partie de support de charges (22a - 22h) au moins au nombre de une dans au moins une position, en particulier dans une position finale, périodiquement en fonction d'un premier actionnement par le commutateur (42) du mécanisme d'entraînement de la partie de support de charges dans la position au moins au nombre de une, et/ou **en ce qu'**il présente une commande (52) servant à la commutation active et/ou à la désactivation du mécanisme d'entraînement (24a - 24h) de la partie de support de charges et/ou du commutateur (42) du mécanisme d'entraînement de la partie de support de charges à l'aide d'au moins une condition d'activation.

14. Support de charges selon la revendication 13, **caractérisé en ce que** la commande (52) présente une entrée de capteur, en particulier pour un capteur de distance (55), et/ou un capteur et est configurée sous la forme d'une condition d'activation aux fins de l'analyse d'un signal de capteur du capteur, et/ou **en ce que** la condition d'activation au moins au nombre de une comporte une valeur inférieure ne dépassant pas une vitesse limite du véhicule (80), en particulier un arrêt du véhicule (80), et/ou un arrêt d'un moteur de véhicule du véhicule et/ou une condition « portières de véhicule - déverrouillées » et/ou « hayon déverrouillé » et/ou **en ce que** la condition d'activation au moins au nombre de une est un signal de libération pouvant être envoyé par un commutateur de libération, et/ou **en ce que** la condition d'activation au moins au nombre de une est un signal « aucun obstacle dans la zone de déplacement de la partie de support de charges devant être entraînée ».

15. Support de charges selon l'une quelconque des revendications précédentes, **caractérisé en ce qu'**il présente au moins un système d'affichage de fonctionnement (59) optique et/ou acoustique pour au moins un affichage de fonctionnement du mécanisme d'entraînement (24a - 24h) de la partie de support de charges et/ou au moins une sortie de signal servant à commander un système d'affichage de fonctionnement (59) du véhicule (80), et/ou **en ce qu'**il présente en particulier un système de fixation (16) disposé en particulier au niveau de la base de support (11 ; 11f - 11 h) et destiné à la fixation amovible au niveau du véhicule (80), en particulier à un attelage de remorque (82) du véhicule (80), ou **en ce que** la base de support (11 ; 11f - 11h) est logée de manière mobile au niveau d'un ensemble formant palier du véhicule.
